# EUROPEAN PATENT APPLICATION

(11) **EP 4 498 540 A1**
(43) Date of publication of application: **29.01.2025**
(21) Application number: 23188542.7
(22) Date of filing: 28.07.2023
(51) Int. Cl.: H02B 1/20, H02B 1/21, H02B 1/32

(54) **HYBRID POWER SUPPLY BUSBAR, BUSBAR BOARD, AND POWER SUPPLY SYSTEM**

(71) Applicant: Wöhner Besitz GmbH, 96472 Rödental (DE)
(72) Inventor: Steinberger, Philipp, 96450 Coburg (DE); Masel, Joram, 96328 Küps (DE); Henning, Hans-Jürgen, 96237 Ebersdorf (DE)
(74) Representative: Bratovic, Nino Maria

(57) **Abstract**

The present invention provides a hybrid power supply busbar, a busbar board, a power supply system, and a method for assembling a busbar board.

The hybrid power supply busbar comprises:
a first-type connection portion (110) having a plurality of regularly placed slots (112) for receiving, from a front side (FS) of the busbar (100), electrical and/or mechanical interfaces (511-i, 512-i) of electric devices of a first connection type (510a, 510b);
a second-type connection portion (120) having a front-side contact part (122) at the front side (FS) of the busbar (100) and a rear-side engagement part (124) facing away from the front-side contact part (122), for first electrical and/or mechanical interfaces (521-i, 523-i) of electric devices of a second connection type (520a, 520b) to engage the rear-side engagement part (124); and
a rear-side power-coupling portion (130) extending from the second-type connection portion (120) and away from the front side (FS) of the busbar (100), for receiving a feed-in current for powering the busbar (100) and/or for providing a feed-out current at a rear side (RS) of the busbar (100).

## Description

### Field of the invention

The invention relates to a hybrid power supply busbar, a busbar board, and a power supply system, all providing the option of a rear-side power supply while a front side is used for mounting electrical devices of all kinds.

### Background of the invention

Power supply system for distributing electrical power among electrical devices are typically mounted in a control cabinet. Examples of electrical devices comprise switch gear and switching elements, such as contactors, fuse elements, or even display units, which can for example indicate the operating states of down-stream power-consuming entities. Space within control cabinets is scarce and therefore expensive, in particular regarding the area that is accessible to a user for mounting electrical devices.

In a conventional control cabinet the power feed-in of electrical supply power is performed by means of a power supply module placed on a front side of the busbar. This has the disadvantage that the space required for this front side power supply module is lost for other busbar components.

EP 4 184 732 A1 describes a power supply module for rear-side power supply of a power distribution busbar system.

### Summary of the invention

It is an objective of the present invention to improve upon existing power supply systems, in particular regarding flexibility of use and compatibility, simplicity of design, and operational performance.

The above described problems are solved by the subject-matter of the independent claims.

Accordingly, according to a first aspect of the present invention, a hybrid power supply busbar is provided, comprising:
a first-type connection portion having a plurality of regularly placed slots for receiving, from a front side of the power supply busbar, electrical and/or mechanical interfaces of electric devices of a first connection type through (at least) a selection (in particular an arbitrary selection) of the slots;
a second-type connection portion having a front-side contact part at the front side of the power supply busbar and a rear-side engagement part facing away from the front-side contact part, for first electrical and/or mechanical interfaces of electric devices of a second connection type to engage the rear-side engagement part while second electrical and/or mechanical interfaces thereof contact the front-side contact area; and
a rear-side power-coupling portion extending from the second-type connection portion and away from the front side of the power supply busbar, for receiving a feed-in current for powering the power supply busbar at a rear side of the power supply busbar and/or for providing a feed-out current at the rear side of the power supply busbar.

Electrical devices of the first connection type and/or electrical devices of the second connection type may be any of: fuse holders, fuse switch disconnectors, switch disconnectors, switch disconnectors with fuses, adapters for MCB or MCCBs or motor starters or contactors, power supplies, motor starters, lightning protectors and other electrical and/or electronic devices.

The term "hybrid power supply busbar" or "hybrid busbar" refers to the compatibility of the power supply busbar with electric devices of the first connection type as well as with electric devices of the second connection type, in contrast to conventional, "non-hybrid" power supply busbars, which are configured to be compatible exclusively with one or the other, if no adapter is used.

Receiving the electrical and/or mechanical interfaces of the electric devices of the first connection type through (at least) a selection of the slots refers to the fact that in general, each electrical device (e.g., an adapter, a switching component or the like) will only occupy some of the slots, the primary purpose of a busbar being to provide electrical power to a plurality of devices. It shall be understood that, generally, an arbitrary selection of the slots may be made for mounting any of the electrical devices.

In some variants, it is preferred that the front side (or: the mounting side, or: mounting surface) of the power supply busbar is as regular as possible, thus providing maximum flexibility to users about where to mount which electrical devices. The front side is designated as such, because in general the power supply busbars (e.g., within a busbar board) will be mounted with its rear side to a wall or a mounting plane, and with its front side in the front, accessible to a user for mounting and dismounting electrical devices.

As regards the electrical devices of the second connection type, it shall be understood that the first electrical and/or mechanical interfaces and the second electrical and/or mechanical interfaces of the same device are simultaneously contacting the front-side contact part and the rear-side engagement part, respectively, when such a device is mounted to the power supply busbar. In general, any of the first and/or the second mechanical interfaces may be electrical and mechanical, purely electrical, or purely mechanical, although typically at least one interface of any device will have at least electrical functionality.

An electrical interface (or: an interface with electrical functionality) means that said interface is capable to receive and/or output electrical power for/from the device. A mechanical interface (or: an interface with mechanical functionality) means that said interface is capable of fixing the device in some way or direction to the power supply busbar. An electrical and mechanical (or: electro-mechanical) interface thus provides some mechanical fixing, or stability, while also allowing electrical current to pass through.

The rear-side power-coupling portion allows to exchange electrical power or current between an external source/sink (for example, using a power supply module as described in the following) and the power supply busbar, at a rear side, while electrical devices can be easily mounted (or: attached) at the front side of the power supply busbar.

This has a number of advantages: first, none of the valuable (since usually scarce) space on the front side has to be used for feeding current into (or out of) the power supply busbar. This frees up more space for electric devices on the front side, thus increasing space efficiency of switching arrangements, for example within a control cabinet.

Second, power supply from/to the power supply busbar is usually less frequently subject to changes than the arrangement of electric devices on the front side. Thus, parts of the power supply busbar that are more often needed are conveniently placed at the front side (i.e., the accessible side when the power supply busbar is mounted), and parts to which access is less often needed are placed at the rear.

In this way, a specifically adapted power supply busbar for rear-side power coupling is provided, which improves previously known system.

The power supply busbar may be adapted for carrying a current of 400A or more, of 600 A or more, or even of 800 A or more. It may have a length of at least 100 mm. For example, its length may be between 100 mm and 2000 mm, especially between 200 mm and 1600 mm, or between 300 mm and 1500 mm, all end values included. A total cross-sectional area of the power supply busbar may be between 150 mm² and 400 mm², preferably between 200 mm² and 350 mm², more preferably between 210 mm² and 300 mm².

In some advantageous embodiments, refinements, or variants of embodiments, the rear-side power-coupling portion is configured to be a rear-side feed-in portion for receiving a feed-in current for the power supply busbar to provide current to electric devices of the first connection type via the first-type connection portion and/or to electric devices of the second connection type via the second-type connection portion. In this way, the entire front side of the power supply busbar is usable for mounting electrical devices. In addition, any operation that would jeopardize the power supply of the entire power supply busbar is more likely to be prevented, because the parts or components providing the rear-side feed-in are not (easily, or at all) accessible from the front.

In some advantageous embodiments, refinements, or variants of embodiments, any cross-section perpendicular to the longitudinal extent of the power supply busbar intersects with the first-type connection portion, the second-type connection portion and the rear-side power-coupling portion. Accordingly, the entire power supply busbar provides, at all locations, all three portions, thus providing maximum flexibility and variability to a user.

In some advantageous embodiments, refinements, or variants of embodiments, the power supply busbar is integrally formed of at least one metal and/or at least one metal alloy. This has considerable advantages in the present context, because the power supply busbar of the present invention provides structural stability in all directions: of course, in its longitudinal direction, but also perpendicular to it, because of the specific shape with the rear-side power-coupling portion extending away from the front side. In particular, when the power supply busbar is mounted in a busbar board, it will typically pass through strengthen the busbar board from left to right (in longitudinal direction) but also from its front side to its rear side.

In some advantageous embodiments, refinements, or variants of embodiments, the first-type connection portion and the second-type connection portion make up the front side of the power supply busbar. Preferably, they each make up at least 35 % of the front side of the power supply busbar, more preferably each at least 40% or more, still more preferably each 45% or more.

In some advantageous embodiments, refinements, or variants of embodiments, the rear-side power-coupling portion extends essentially along an imagined dividing line between the first-type connection portion and the second-type connection portion and perpendicular to the front side of the power supply busbar. In this way, the power supply busbar has an especially robust shape with a well-balanced profile for current-carrying and for electrical and mechanical load distribution.

In some advantageous embodiments, refinements, or variants of embodiments, the power supply busbar comprises at least one locking portion arranged between the second-type connection portion and the rear-side power-coupling portion and/or between the first-type connection portion and the rear-side power-coupling portion and adapted for receiving a locking catch of a busbar board for locking the power supply busbar within the busbar board. Preferably, the locking portions are immovable such that the power supply busbar can only be inserted into the busbar board (typically a rear-side component of the housing of the busbar board) longitudinally. In this way, the busbar board including the power supply busbars can be easily assembled, and yet have high stability.

According to a second aspect, the invention also provides a busbar board comprising a housing in which a plurality of power supply busbars according to any embodiment of the first aspect of the invention is arranged. The housing may have a touch-protected front side through which the electrical and/or mechanical of the electric devices of the first connection type can enter the slots of the first-type connection portion and through which the mechanical and/or electrical interfaces of the electric devices of the second connection type can engage with the front-side contact part and/or the rear-side engagement part. The may housing further have at least one rear-side opening for each of its power supply busbars, for receiving external electrical power-coupling contacts for contacting the rear-side power-coupling portion of the respective power supply busbar for feeding power to the respective power supply busbar and/or for receiving power from the respective power supply busbar.

Preferably, the housing is touch-protected from all sides, especially from its front side or its the rear side. Touch protection may be quantified using the "IP code", or "Ingress Protection" code defined by the International Electrotechnical Commission (IEC) under the international standard IEC 60529 or the like. For example, the housing may have an IP20 touch protection rating.

In some advantageous embodiments, refinements, or variants of embodiments, the touch-protected front side of the housing of the busbar board comprises, for each of the power supply busbars, a first row of first openings which align with the slots for allowing electrical and/or mechanical interfaces of the electric devices of the first connection type to pass through them and through the slots of the corresponding power supply busbar below; and
a second row of second openings for allowing the electrical and/or mechanical interfaces of the electrical devices of the second connection type to pass through and engage with the second-type connection portion of the corresponding power supply busbar below (specifically, with the front-side contact part and/or the rear-side engagement part);
wherein the first and second rows of first and second openings may be identically formed for all the power supply busbars, or partially differently for at least one power supply busbar.

In some advantageous embodiments, refinements, or variants of embodiments of the busbar board, the second openings for a first one of the power supply busbars have a shape different from a shape of the second openings for at least one other one of the power supply busbars. This allows providing additional functions such as a preventing a mounting of electrical devices to the busbar board with the wrong orientation, providing additional opportunities for mechanically fixing (or: reversibly locking) the electrical devices to the busbar board, and the like.

The invention thus also provides an assembly of a busbar board according to any embodiment of the second aspect of the present invention, together with at least one electrical device (of the first or the second connection type) configured such that the shape of the second openings of the busbar board prevent mounting the electrical device to the busbar board in a wrong orientation (e. g., upside down) or in a wrong position (e.g., connected to a set of power supply busbars out of the power supply busbars comprised by the busbar board).

Preferably, all second openings within the same row (or, in other words: provided for contacting the same power supply busbar within the busbar board) have the same shape. For example, the second openings for busbar A may have shape X, and the second openings for busbar B may have shape Y. This provides, again, flexibility to choose any of the second openings for mounting an electric device. In other variants, the second openings within one row may exhibit a regular pattern of at least two different shapes of second openings, for example, a pattern of X Y X Y X Y, a pattern of X X Y X X Y, and so on. Two different rows may have the same set of shapes, but with different patterns, or different arrangements of the same pattern. For example, busbar A may have X Y X Y X Y and busbar B may have Y X Y X Y X. Many other combinations are possible.

In some advantageous embodiments, refinements, or variants of embodiments, the second openings for the first one of the power supply busbars each are shaped as rectangles modified by at least one flared portion, whereas the second openings for at least one other one of the power supply busbars are shaped as simple rectangles. This means that electrical devices having a protrusion of any kind aligning with the flared portion when positioned and oriented correctly for mounting, are prevented from being mounted in a position and/or orientation where the protrusion is aligned with a second opening of the at least one of the power supply busbars shaped as simple rectangles.

In some advantageous embodiments, refinements, or variants of embodiments, the second openings for the first one of the power supply busbars each are shaped as rectangles modified by at least two flared portions, whereas the second openings for at least one other one of the power supply busbars are shaped as rectangles modified by only a single flared portion. In this way, the flared portions provided for more than one power supply busbar may be used to anchor fastening hooks, while the additional flared portion may be used to prevent mounting of the electrical device in the wrong position and/or orientation.

According to a third aspect of the present invention, a power supply system is provided, which comprises a busbar board according to any embodiment of the second aspect of the present invention, and a power supply module for rear-side power coupling to the busbar board (feed-in or feed-out). The busbar board may be configured to interface with the power supply module, the power supply module having, for each power supply busbar of the busbar board, at least one electrical power-coupling contact arranged to enter at least one of the rear-side openings of the busbar board when the busbar board interfaces with the power supply module.

In some advantageous embodiments, refinements, or variants of embodiments, the busbar board further comprises pairs of fastener openings, through which fastener elements of pairs of fastener elements of the power supply module can interface with a corresponding fastener ledge of the busbar board. Each fastener element may be rotatably mounted at the power supply module and be able to be rotated between an unlocking position in which the fastener element can be inserted into a fastener opening of the busbar board and removed therefrom, and a locking position in which the fastener element is engaged with the fastener ledge, fastening the busbar board to the power supply module.

In some advantageous embodiments, refinements, or variants of embodiments, fastener elements of the same pair of fastener elements are arranged to rotate towards each other when they are rotated from the unlocking position into the locking position. In this way, the busbar board is held in a stable manner against movement in multiple directions.

Preferably, the power supply module and the busbar board (specifically: the fastener elements, the fastener ledges and the fastener openings) are configured such that, when the fastener elements are in the locking position, they are in a position oblique (not parallel and not perpendicular) to the mounting surfaces of the power supply module and the busbar board to one another, such that the respective axis of rotation of each fastener element is closer to the center of the busbar board than the catch (or: tip) of said fastener element. Preferably, the distance between the axes of rotation of the fastener elements of one pair of fastener elements is the closest distance between said fastener elements of said pair of fastener elements, and is in particular closer than the distance between the catches of the fastener elements of the pair of fastener elements.

In this way, when a force acts on the busbar board that drives (pushes, pulls, or biases) it away from the power supply module and pulls on the (catches of the) fastener elements, on each fastener element a torque is exerted, biasing (self-reinforcing) the respective fastener element to turn towards the respective other fastener element of the same pair, in the direction in which also the catch of the respective fastener element is pointed, thus increasing the grip of the catch of the fastener element on the fastener ledge.

In some advantageous embodiments, refinements, or variants of embodiments, the power supply module comprises a housing having a plurality of protrusions, and the housing of the busbar board comprises a plurality of rear-side recesses configured to receive the plurality of protrusions in a close-fitting manner for securing the busbar board in directions in parallel to the front side (of the power supply busbars when the busbar board interfaces with the power supply module. The protrusions and recesses interact to secure the busbar board more firmly to the power supply module (or a similarly designed support module).

According to a fourth aspect, the invention provides a method for assembling a busbar board according to any embodiment of the second aspect of the present invention, the method comprising at least steps of:
providing a (in particular rear-side) component of an interior portion of the housing of the busbar board;
longitudinally sliding in the power supply busbars at a side end of the (in particular rear-side) component of the interior portion;
closing at least one open side of the (in particular rear-side) component of the interior portion with an (in particular rear-side) component of an end portion of the housing, sealing the power supply busbars in.

The component of the interior portion and/or the component of the end portion may be the entire interior portion or end portion, respectively, itself/themselves. Multiple interior portions may be combined laterally, i. e., along the extent of the power supply busbars, for accommodating power supply busbars of various lengths.

Preferably, however, the component(s) of the interior and/or end portions are rear-side components (i. e., components of the busbar board intended for mechanical contact with a power supply module or support module). The method may then include a step of assembling (or: completing) the respective interior portion and/or end portion by combining it with a respective front-side component. The front-side component may in particular comprise the first and second openings. Advantageously, the components are configured such that, after the combining, the rear-side component(s) and front-side component(s) cannot be separated non-destructively.

The at least one interior portion and the at least one end portion are advantageously also configured to be combinable in such a way that, after combination, they cannot be separated any more in a non-destructive manner. Similarly, when more than one interior portion is provided, the interior portions are combined with one another such that they, also, are not separable in a non-destructive manner.

According to a fourth aspect, the invention also provides a power supply busbar without a first-type connection portion. While electrical devices of the first connection type can only be connected via an adapter of the second connection type, such a power supply busbar still provides advantages compared to previously known power supply busbars because of the provision of the rear-side power-coupling portion.

Accordingly, the invention also provides a power supply busbar is provided, comprising:
a (second-type) connection portion having a front-side contact part at the front side of the power supply busbar and a rear-side engagement part facing away from the front-side contact part, for first electrical and/or mechanical interfaces of electric devices (of a second connection type) to engage the rear-side engagement part while second electrical and/or mechanical interfaces thereof contact the front-side contact area; and
a rear-side power-coupling portion extending from the (second-type) connection portion and away from the front side of the power supply busbar, for receiving a feed-in current for powering the power supply busbar at a rear side of the power supply busbar and/or for providing a feed-out current at the rear side of the power supply busbar.

### Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description.

Scales within drawings may be accurate in some variants, and may be seen as simply illustrative in other variants.

In the drawings:
Fig. 1A shows a power supply busbar according to an embodiment in a cross-sectional view;
Fig. 1B shows the power supply busbar of Fig. 1A in an oblique 3-dimensional depiction;
Fig. 2A, 2B show a variant power supply busbar according to another embodiment;
Fig. 3A, 3B show another variant power supply busbar according to yet another embodiment;
Fig. 4A shows a busbar board according to another embodiment of the present invention;
Fig. 4B shows a detail of the busbar board of Fig. 4A;
Fig. 4C shows an isometric view of the busbar board of Fig. 4A and Fig. 4B, with a power supply busbar according to

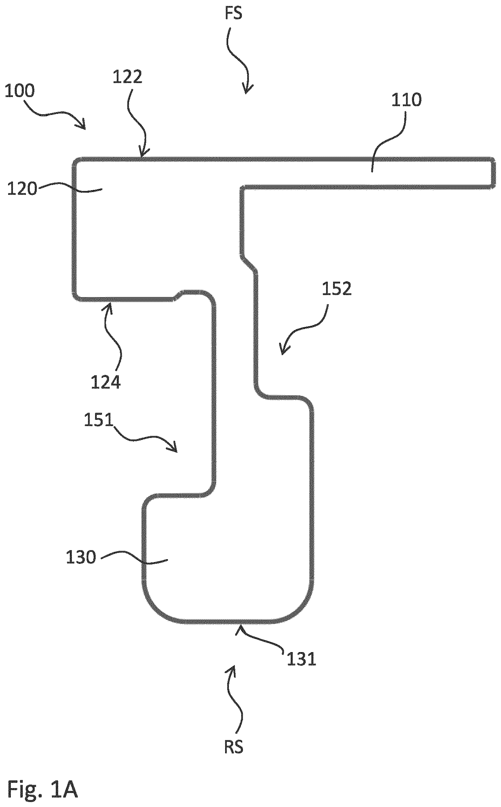

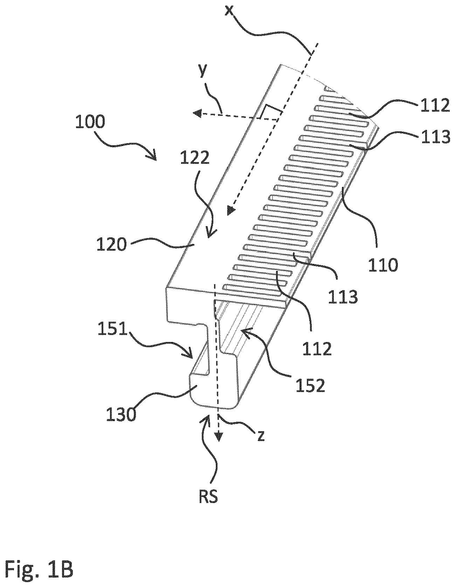

Fig. 1A and Fig. 1B mounted therein, with a few parts faded out;

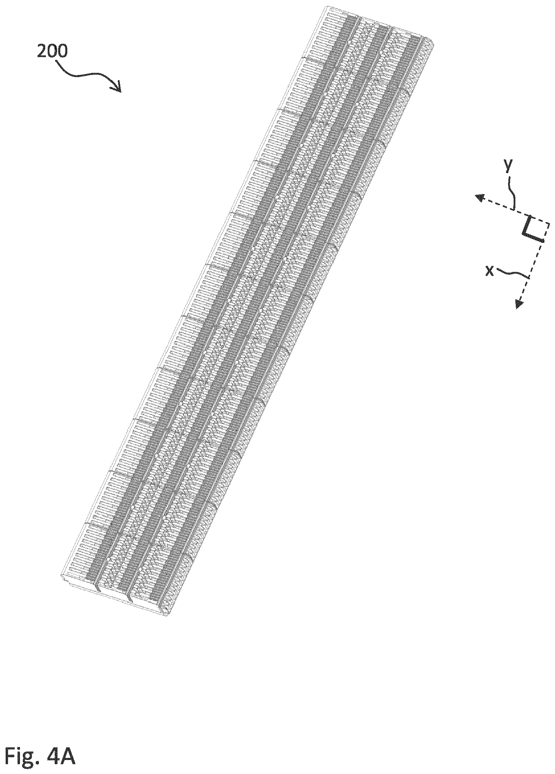

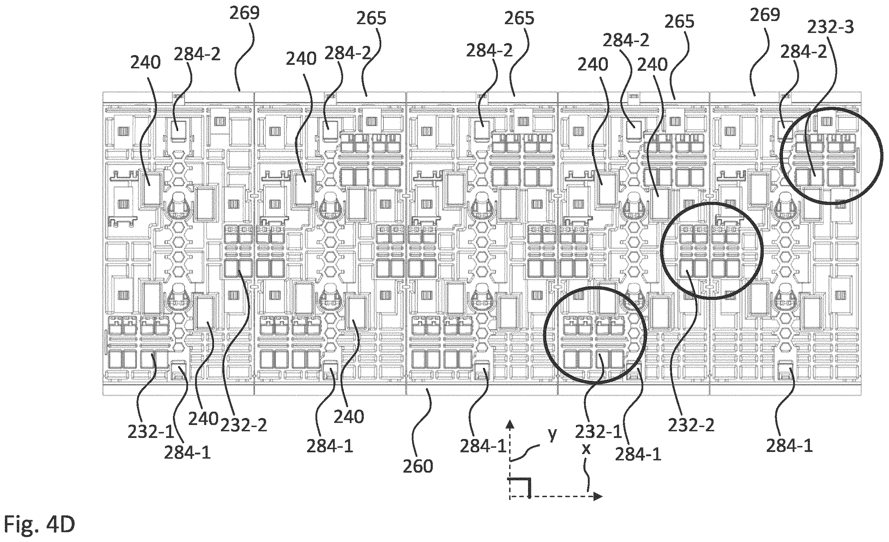

Fig. 4D shows the busbar board of Fig. 4A-4C from its rear side;

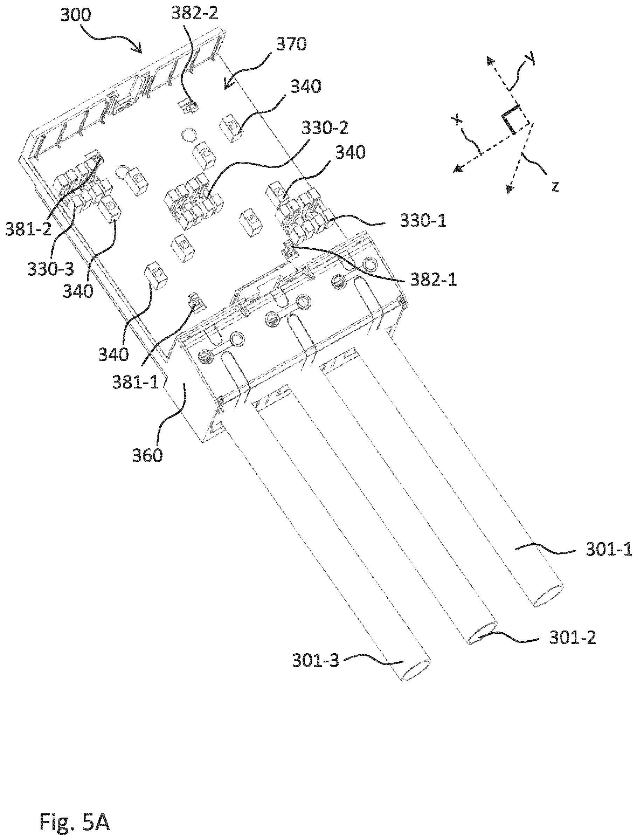

Fig. 5A shows a power supply module of an embodiment from a front side;

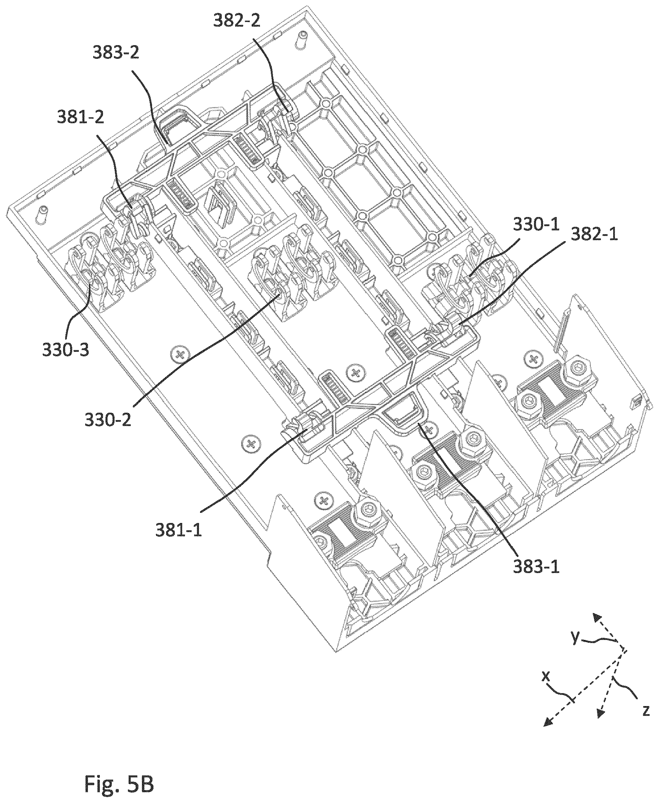

Fig. 5B shows an interior view of the power supply module of Fig. 5A seen from the same direction;

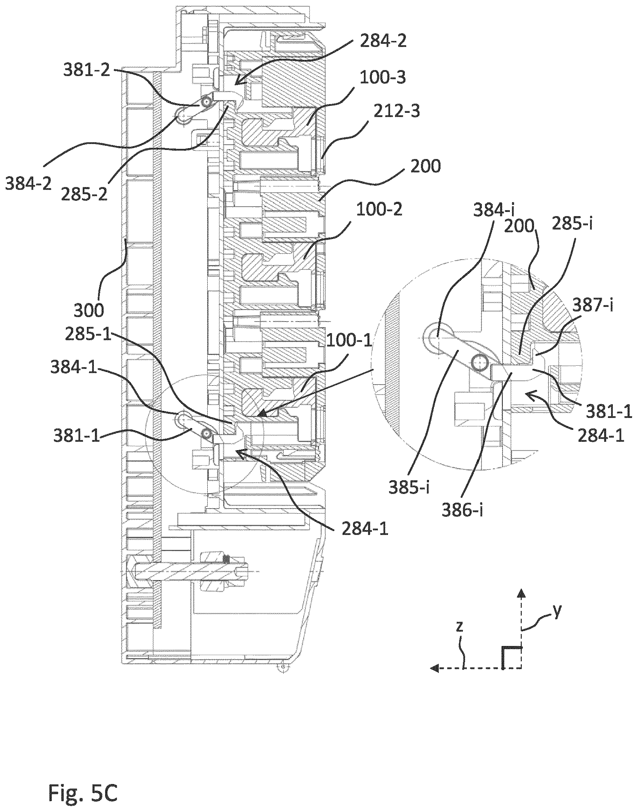

Fig. 5C shows a cross-section through the power supply module of Fig. 5A and 5B, with the busbar board of Fig. 4A-4D mounted thereon;

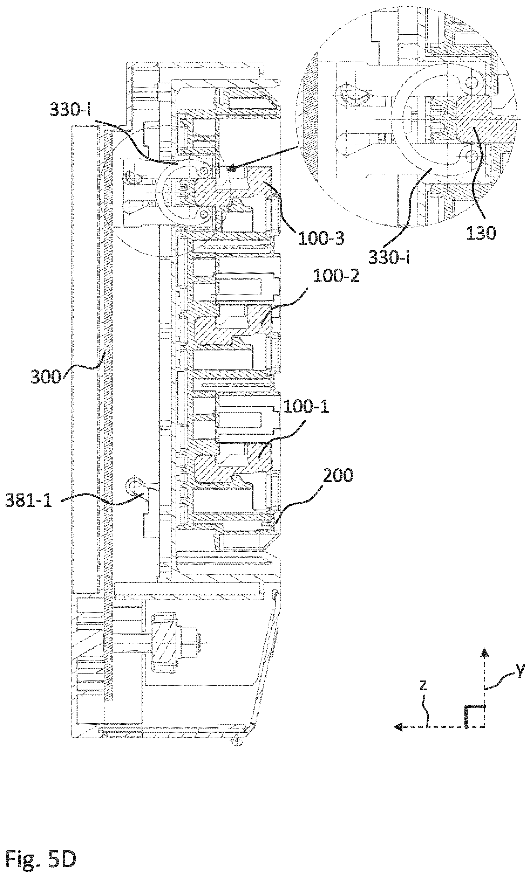

Fig. 5D shows a cross-section through the power supply module and the busbar board in parallel to the cross-section shown in Fig. 5C;

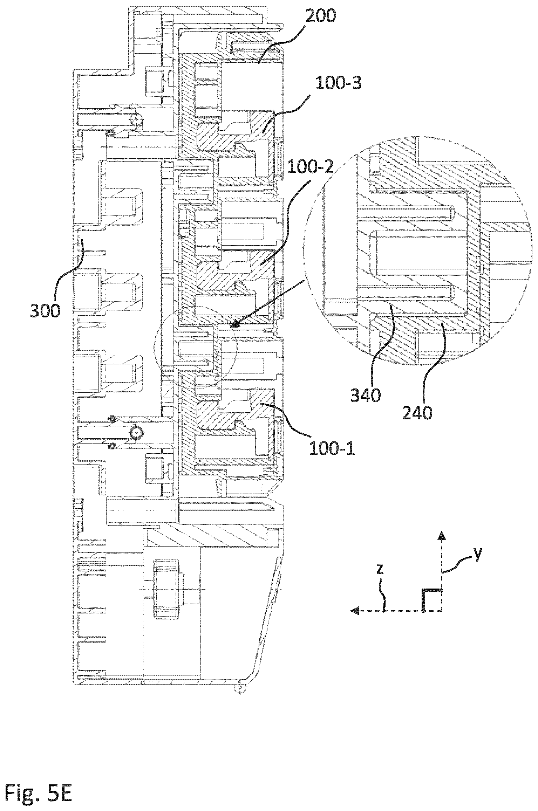

Fig. 5E shows another cross-section through the power supply module and the busbar board in parallel to the cross-section shown in Fig. 5C and the one in Fig. 5D;

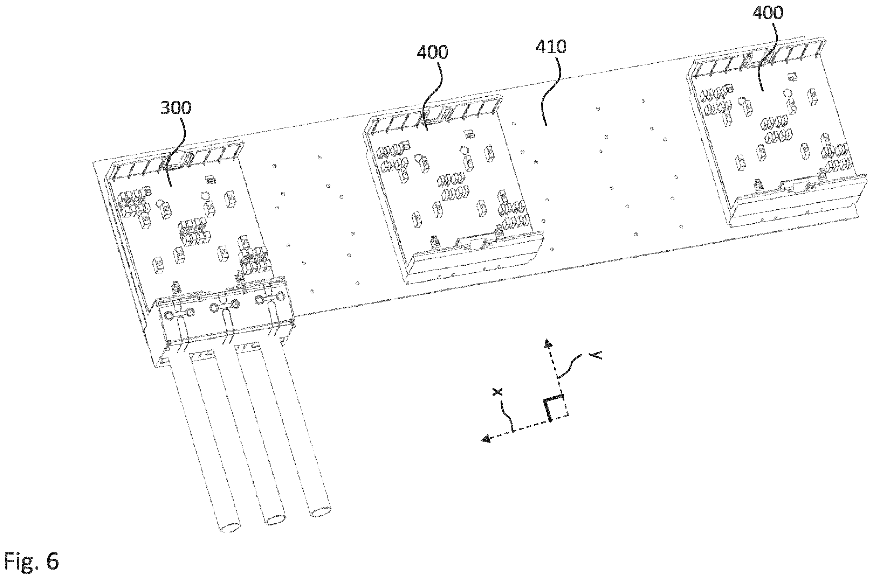

Fig. 6 shows a configuration of the power supply module of
Fig. 5A and Fig. 5B, together with two support modules, as part of a power supply system according to an embodiment of the present invention;

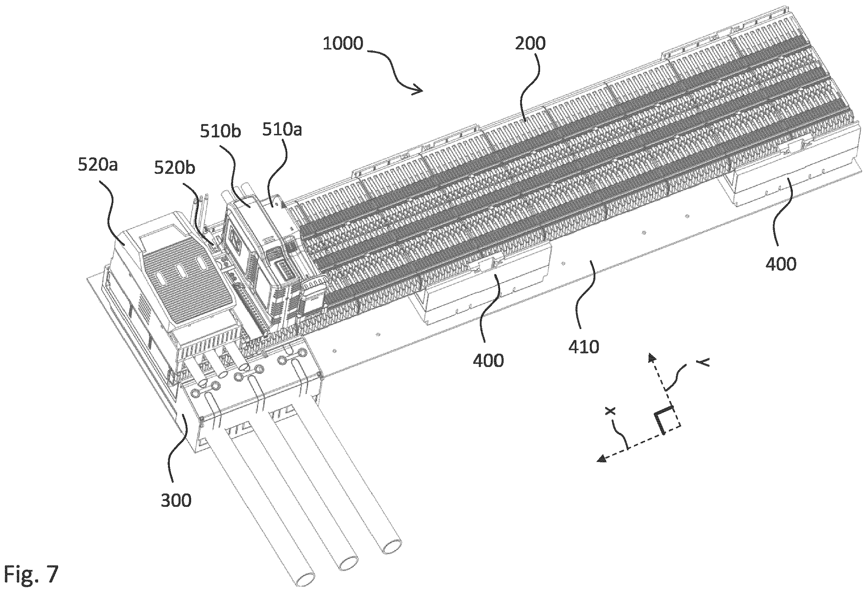

Fig. 7 shows an overview of the power supply system according to an embodiment of the present invention;

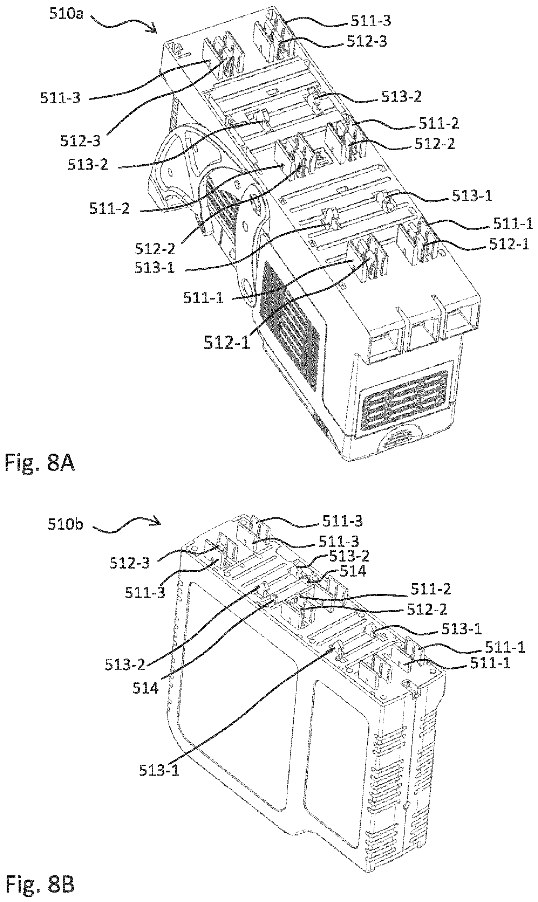

Fig. 8A, 8B show electric devices of a first connection type, seen from their mounting side;

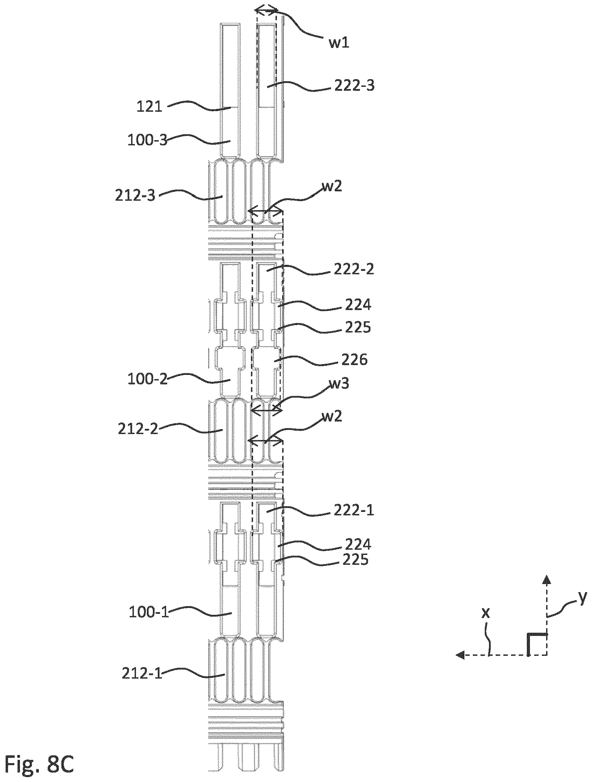

Fig. 8C shows specific details of openings of the busbar board of Fig. 4A-4D;

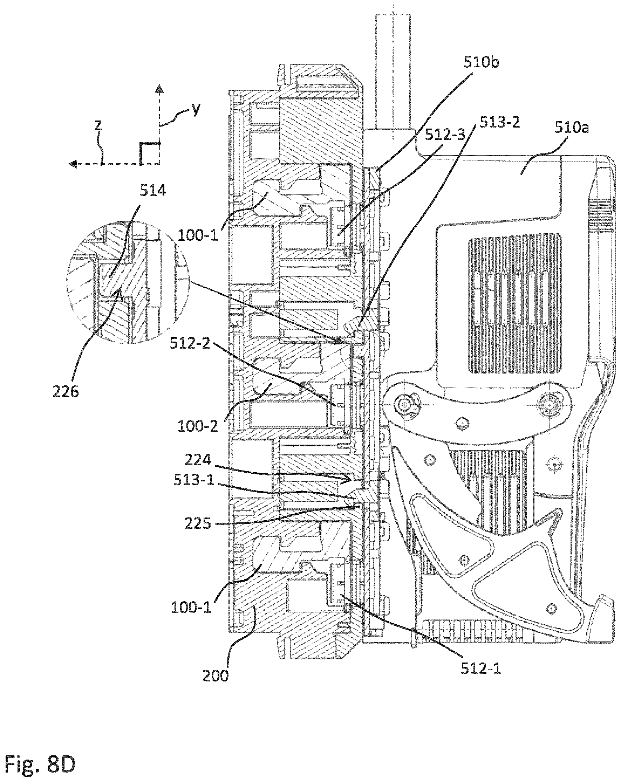

Fig 8D shows a cross-section through an electrical device of the first connection type mounted on the busbar board of Fig. 4A-4D;

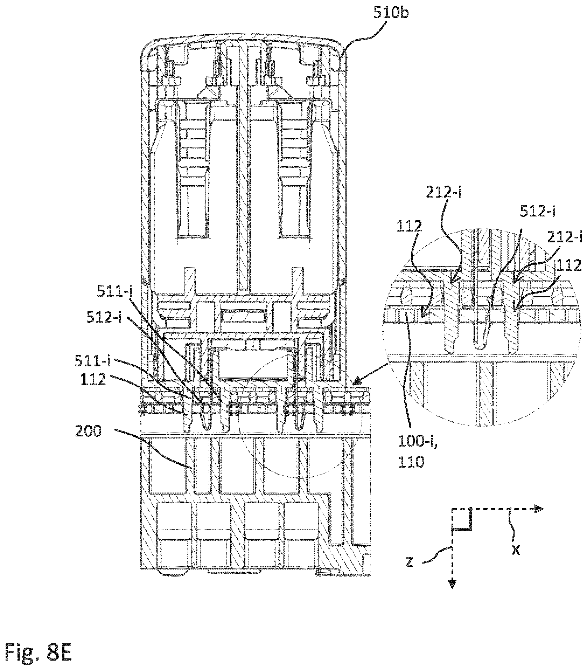

Fig 8E shows another cross-section through an electrical device of the first connection type mounted on the busbar board of Fig. 4A-4D;

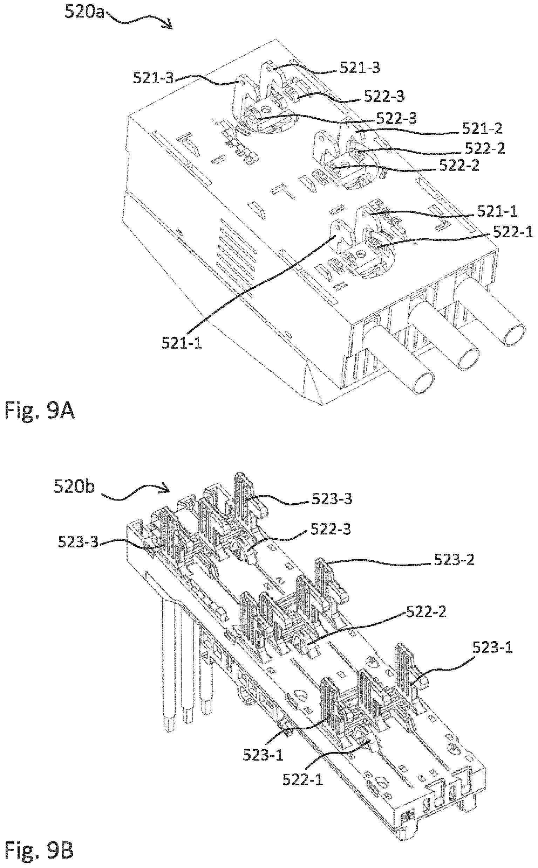

Fig. 9A, 9B show electric devices of a second connection type, seen from their mounting side;

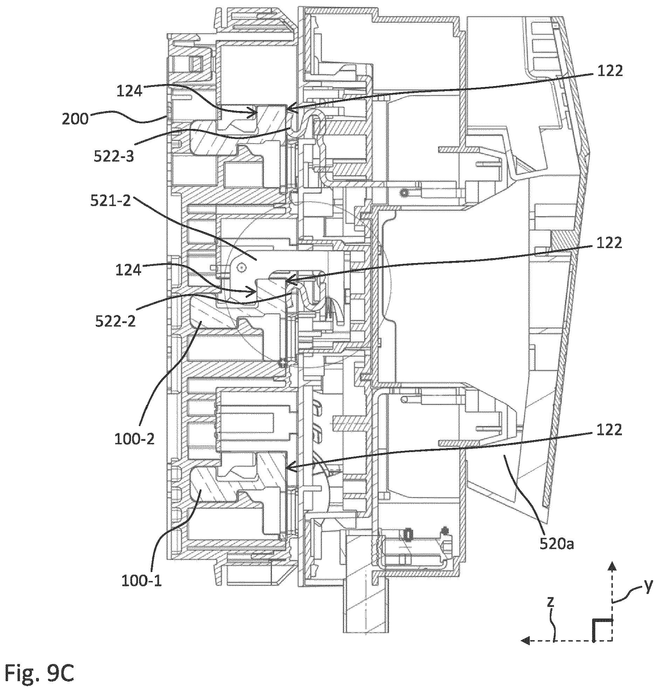

Fig 9C shows a cross-section through an electrical device of the second connection type mounted on the busbar board of Fig. 4A-4D; and

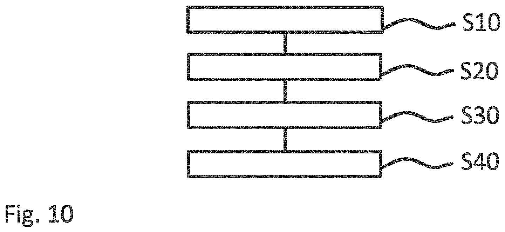

Fig. 10 schematically illustrates a method for assembling a busbar board according to an embodiment of the present invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings. In general, the Figures relate to a common coordinate system x, y, z, related to how different components are designed to be arranged with respect to one another.

### Detailed description of the drawings

Fig. 1A shows a schematic cross-section through a power supply busbar 100 according to an embodiment of the first aspect of the present invention.

As is evident from Fig. 1A, said power supply busbar 100 roughly comprises, or consists of, three portions: a first-type connection portion 110, a second-type connection portion 120, and a rear-side power-coupling portion 130. Preferably, the entire power supply busbar 100 is integrally formed from at least one metal and/or at least one metal alloy. Preferably, the power supply busbar 100 may have a length of between 300mm and 1500mm.

The cross-sectional area of the power supply busbar 100 shown in Fig. 1A may be between 150 mm² and 400 mm², preferably between 200 mm² and 350 mm², more preferably between 210 mm² and 300 mm². In one variant, the power supply busbar 100 has a total cross-sectional area of 300 mm².

Returning to the three main portions of the power supply busbar 100, reference will also be made to Fig. 1B, which shows an oblique 3-dimensional view of an end part of the same power supply busbar 100.

The first-type connection portion 110 is configured to receive electrical devices of a first connection type, from a front side FS of the power supply busbar 100. Receiving may in particular comprise an electrical connection and/or a mechanical fixation. The electrical devices of the first connection type will be described in more detail in the following (see, for example, the electrical devices of the first connection type 510a, 510b in Fig. 8A and Fig. 8B). For this purpose, the first-type connection portion 110 comprises a plurality of regularly placed slots 112, which may in particular be equally spaced slots 112.

Apart from the slots 112, the first-type connection portion 110 may also comprise regularly placed, preferably equally spaced, inlet slots 113. While the slots 112 are bounded on all sides by the first-type connection portion 110, the inlet slots 113 are open on their respective longitudinal end facing away from the second-type connection portion 120, i.e., they are open to the free edge of the first-type connection portion 110.

The inlet slots 113 may be configured to receive corresponding (inward-protruding) ridges of a housing of a busbar board (see Fig. 4A and following as well as the description thereof). Their main purpose is to ensure and maintain good alignment between the slots 112 and the (preferably touch-protected) housing of the busbar board. This is particularly useful when the power supply busbars 100 and the housing of the busbar board are made from materials with different thermal expansion coefficients, as is usually the case.

The first-type connection portion 110 is here formed, for example, as a flat strip extending along the longitudinal direction x of the power supply busbar 100, wherein the flat strip is completely penetrated by the slots 112. The slots 112 are provided such that electrical and/or mechanical interfaces of the electric devices of the first connection type 510a, 510b can be inserted into and/or through at least a selection of the slots 112. Advantageously, a distribution of the slots 112 is uniform so that a user can freely choose where to attach an electric device of the first connection type 510a, 510b.

For example, again as shown in Fig. 8A and Fig. 8B, electrical interfaces 512-1, 512-2, 512-3 (collectively designated as 512-i) may be configured to be inserted into the slots 112, and adjacent mechanical interfaces 511-1, 511-2, 511-3 (collectively designated as 511-i) may be configured (in particular shaped and spaced in such a way from the electrical interfaces 512-i) that they can also be inserted into adjacent (preferably immediately adjacent) slots 112 when the electrical interfaces 512-i are inserted into other slots 112.

When inserted, the electrical interfaces 512-i connect on their lateral sides to the internal side walls of the slots 112, thus providing an electrical connection between the devices 510a, 510b and the power supply busbar 100 via the first-type connection portion 110. The mechanical interfaces 511-i provide, among other benefits, mechanical stability as well as protection for the electrical interfaces 512-i, for example, when the devices 510a, 510b are not mounted on the power supply busbar 100. The electrical interfaces 512-i of the device 510a are arranged in three rows (with two electrical interfaces 512-i each, in turn surrounded by one mechanical interface 511-i on either side), since the device 510a is a 3-pole device. By contrast, device 510b exhibits the same number an arrangement of mechanical interfaces 511-i, but has only two electrical interfaces 512-2, 512-3 in total, the device 510b being a two-pole device.

Returning to Fig. 1A and Fig. 1B, the power supply busbar 100 further comprises a second-type connection portion 120 having a front-side contact part 122 at the front side FS of the power supply busbar 100 and a rear-side engagement part 124 facing away from the front-side contact part 122. The second-type connection portion 120 is configured to receive electrical and/or mechanical interfaces of electric devices of a second connection type. The electrical devices of the second connection type will be described in more detail in the following (see, for example, the electrical devices of the second connection type 520a, 520b in Fig. 9A and Fig. 9B) .

For example, again as shown in Fig. 9A and Fig. 9B, electrical interfaces 522-1, 522-2, 522-3 (collectively designated as 522-i) may be configured to contact the front-side contact part 122 of the second-type connection portion 120 from the front side FS of the power supply busbar 100. Similarly, mechanical interfaces 523-1, 523-2, 523-3 (collectively designated as 523-i) or electro-mechanical interfaces 521-1, 521-2, 521-3 (collectively designated as 521-i), which in particular may be partially or completely hook-shaped, may be configured to wrap around the second-type connection portion 120 and engage the rear-side engagement part 124 facing away from the front-side contact part 122.

The interfaces engaging with the front-side contact part 122 may be electrical and/or mechanical in nature, and the same is true for the interfaces engaging with the rear-side engagement part 124.

For example, in the device 520a of Fig. 9A, both the interfaces 522-i for contacting the front-side contact part 122 as well as the interfaces 521-i for engaging the rear-side engagement part 124 may be made from a metal and/or metal alloy and may function as electrical interfaces. In addition, together they also function as mechanical interfaces, gripping the second-type connection portion 120 of the power supply busbar 100 front and back. In this way, the electrical devices of the second connection type 520a, 520b may be fixed against gravity by being hooked on the second-type connection portion 120, when the power supply busbar 100 is mounted such that the second-type connection portion 120 faces upwards and the first-type connection portion 110 faces downwards.

In the device 520b of Fig. 9B, the interfaces 522-i for contacting the front-side contact part 122 may be metallic electrical interfaces, whereas the interfaces 523-i for engaging the rear-side engagement part 124 may be purely mechanical in nature and may, for example, be integrally formed with the housing of the device 520b. The insulating housing of any of the devices 510a, 510b, 520a, 520b will commonly be made of a type of plastic.

According to the foregoing, in some variants, one way to distinguish between the electrical devices of the first connection type 510a, 510b and the electrical devices of the second connection type 520a, 520b is that the electrical devices of the first connection type 510a, 510b engage with both mechanical interfaces 511-i and electrical interfaces 512-i at the same surface and side of the first-type connection portion 110, while the electrical devices of the second connection type 520a, 520b have electrical and/or mechanical interfaces that engage with the second-type connection portion 120 from two different sides, in particular from the front side FS and the rear.

Returning to Fig. 1A and Fig. 1B, the power supply busbar 100 further comprises a rear-side power-coupling (or: current-coupling) portion 130 extending from the second-type connection portion 12) and away from the front side FS of the power supply busbar 100. The rear-side power-coupling portion 130 is configured to receive a feed-in current for powering the power supply busbar 100, and/or for providing a feed-out current from the power supply busbar 100, both at the rear side RS of the power supply busbar 100.

In preferred variants, the rear-side power-coupling portion 130 is a rear-side feed-in portion for receiving a feed-in current for the power supply busbar 100 to provide current to electric devices of the first connection type 510a, 510b via the first-type connection portion 110 and/or to electric devices of the second connection type 520a, 520b via the second-type connection portion 120.

However, as has been described, the rear-side power-coupling portion 130 may also act as a rear-side feed-out portion, for example when electrical power is fed into the power supply busbar 100 by a feed-in electrical device (of any type) mounted at the front side FS of the power supply busbar 100, in particular at the first-type connection portion 110 or the second-type connection portion 120.

Also, any combinations are possible, for example, variants wherein both feed-in and feed-out are carried out via the rear-side power-coupling portion 130. In some instances, there may even be a configuration wherein both feed-in and feed-out are carried out by electrical devices at the front side FS; although this does not fully exploit the advantageous design of the power supply busbar 100, it is a viable option, for example for a quick testing or as an interim solution.

The first-type connection portion 110, the second-type connection portion 120, and the rear-side power-coupling portion 130 should be understood to extend at least partially (or even completely) along the longitudinal extent (direction x in Fig. 1B) of the power supply busbar 100. Thus, any cross-section perpendicular to the longitudinal extent of the power supply busbar 100 may intersect with all of the first-type connection portion 110, the second-type connection portion 120, and the rear-side power-coupling portion 130.

Returning again to Fig. 1A and Fig. 1B, it is shown that the rear-side power-coupling portion 130 extends essentially along an imagined dividing line between the first-type connection portion 110 and the second-type connection portion 120 and perpendicular to the front side FS of the power supply busbar 100. In Fig. 1B, an orthogonal coordinate system (or: orthogonal tripod) x, y, z is indicated, with x being arranged along the longitudinal extent of the power supply busbar 100. The y direction is perpendicular to the x direction and parallel to the longitudinal extent of the slots 112 and the inlet slots 113, pointing from the first-type connection portion 110 to the second-type connection portion 120 along the front side FS.

The z direction is perpendicular to both x and y and extends from the front side FS towards the rear side RS. Thus, the rear-side power-coupling portion 130 may also be said to extend generally along the z direction, when a mounting plane at the front side FS of the power supply busbar 100 is arranged parallel to the x-y-plane.

The x, y, z coordinate system will be used throughout the drawings, illustrating the respective orientation of the different apparatuses when they are mounted as intended (see, for example, Fig. 7 for an overview).

In Fig. 1A and Fig. 1B, it is also shown that between the more massive sections of the second-type connection portion 120 and of the rear-side power-coupling portion 130, a thinner intermediate section is arranged. It is believed, without intending to be restricted by this possible explanation, that the exceptionally good performance of the power supply busbar 100 may in part stem from the fact that the cross-section of the power supply busbar 100 has a large surface area, which is subject to the skin effect.

The large surface are of the power supply busbar 100 provided by its special cross-sectional contour also improves cooling of the power supply busbars 100: the increased surface area increases radiation cooling. Moreover, as will be described a bit later, a busbar board according to the present invention is provided with numerous openings in its housing, providing opportunity for the heat radiation to escape, as well as for heat convection to occur. In addition, the plastic material of the housing itself provides cooling by heat conduction as well.

Moreover, in the variant shown in Fig. 1A and Fig. 1B, on either side of the rear-side power-coupling portion 130, i.e., between the rear-side power-coupling portion 130 and second-type connection portion 120 on one side, and between the rear-side power-coupling portion 130 and the first-type connection portion 110, a respective locking portion 151, 152 is arranged. The locking portions 151, 152 may be configured to receive locking catches of a busbar board for locking the power supply busbar 100 within the busbar board, especially regarding movement with respect to the z and y directions. The interaction between the power supply busbar 100 and the Busbar board will be described in more detail in the following.

One way to realize the locking portions 151, 152 is that the contour of the cross-section of the power supply busbar 100 runs, from the second-type connection portion 120 towards the rearmost end 131 of the rear-side power-coupling portion 130, first towards the center of the power supply busbar 100 in the y dimension and then again away from said center, thus forming a first locking portion 151. Similarly, the contour of the cross-section of the power supply busbar 100 runs, from the first-type connection portion 110 to the rearmost end 131 of the rear-side power-coupling portion 130, first towards the center of the power supply busbar 100 in the y dimension and then again away from said center, thus forming a second locking portion 152. The first and second locking portions 151, 152 may be provided at the same height (in z direction) (not shown) or at different heights, as shown in the drawings.

In the following, a few other variants and technical considerations for the embodiment of the power supply busbar 100 will be described, in particular with respect to the shape of the cross-section.

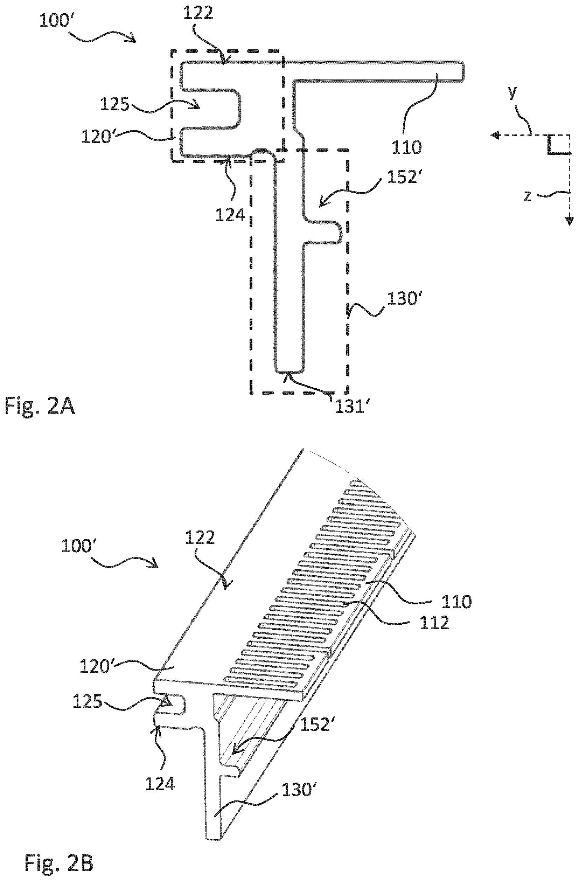

Fig. 2A and Fig. 2B show a variant power supply busbar 100', being different from the power supply busbar 100 of Fig. 1A and Fig. 1B in the configuration of the second-type connection portion 120' as well as in the configuration of the rear-side power-coupling portion 130'.

For the second-type connection portion 120', indicated with a dashed box in Fig. 2A, it is evident that it has the same outer contour as the second-type connection portion 120 of Fig. 1A/1B, but is not provided with a solid cross-section but has an indentation channel 125 (or: a channel-shaped recess, or: a carved-out part), extending in parallel to the y direction, i.e. in parallel to the front side FS and to the longitudinal extent of the slots 112.

The indentation channel 125 within the second-type connection portion 120' may serve multiple purposes: increasing the outer surface of the cross-section of the power supply busbar 100 subject to the skin effect, reducing the weight and the necessary material of the power supply busbar 100, providing additional anchoring facilities for other types of electrical and/or mechanical interfaces, and so on.

It is evident from Fig. 2A and Fig. 2B that the electrical and mechanical interfaces 521-i, 522-i, 523-i of the electrical devices of the second connection type 520a, 520b of Fig. 9A and Fig. 9B can equally well interface/engage with the second-type connection portion 120' as with the second-type connection portion 120, owing to the same outer contour of the second-type connection portions 120; 120'. In particular, both the front-side contact part 122 and the rear-side engagement part 124 are essentially, or completely, unaffected by the presence of the indentation channel 125.

As has been mentioned, a second difference between the power supply busbars 100 and 100' is the configuration of the rear-side power-coupling portion 130'. the rear-side power-coupling portion 130' extends from the second-type connection portion 120' essentially as a flat wall in parallel to the x-z-plane, optionally excepting one (as shown in Fig. 2A/2B) or two (not shown) locking portions 152'. The locking portion 152' of the rear-side power-coupling portion 130' is configured as a simple ledge (or: ledge-like protrusion) extending along the longitudinal extent of the power supply busbar 100 (i.e., along the x direction), arranged in the middle 1/3 of the rear-side power-coupling portion 130' and protruding from the rear-side power-coupling portion 130' in (here negative) y direction. In this variant, a locking latch corresponding to the locking portion 152' may be provided only on the right side of Fig. 2A by a busbar board.

The rearmost end 131' (or, here: rearmost tip) of the rear-side power-coupling portion 130' is simply the flat end of the wall-shaped rear-side power-coupling portion 130'. Advantageous shapes of the rearmost end 131' can be selected depending on the type of electrical power-coupling contacts provided to engage with it, as will be described in the following in more detail, in particular with respect to Fig. 5B.

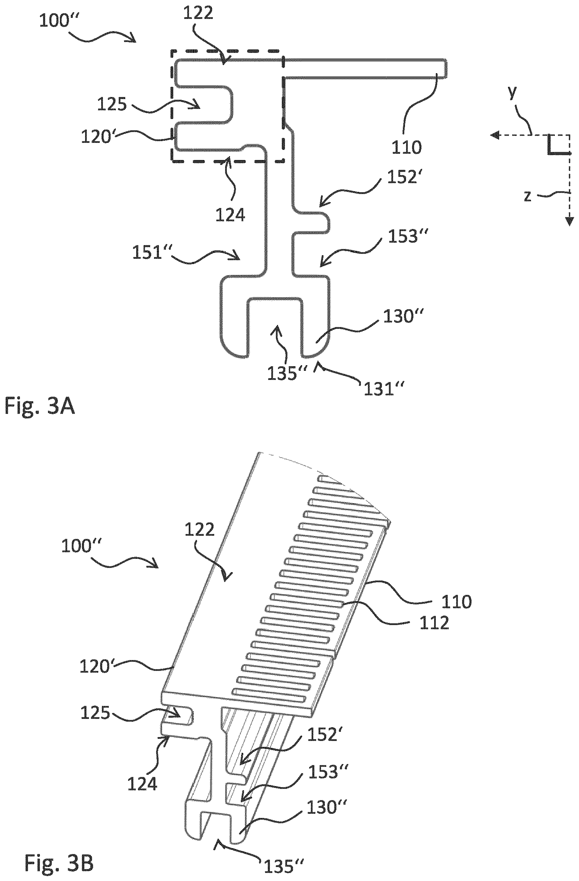

Fig. 3A and Fig. 3B show another variant power supply busbar 100'', being different from the power supply busbar 100' of Fig. 2A and Fig. 2B in the configuration of the rear-side power-coupling portion 130''.

Said rear-side power-coupling portion 130" has as (or: at) its rearmost end 131'' a two-pronged cross-section with a channel 135'' along the x direction formed in between. Where the rear-side power-coupling portion 130" starts to flare out, coming from the second-type connection portion 120', into the two-pronged section, on either sides of the rearmost end 131'' a corresponding locking portion 151", 153" is formed, in addition to the locking portion 152' already present in the power supply busbar 100'.

From the foregoing it is evident that the configuration and shape of the power supply busbar 100; 100'; 100" may be advantageously and variously adapted to different locking latches, different electrical and/or mechanical interfaces, and so on, while still profiting from the core ideas of the present invention. In the following, as an example, the description of the invention will continue with the power supply busbar 100 of Fig. 1A and Fig. 1B without any prejudice. It shall be understood that any other variant of the power supply busbar 100 may be used equally well, if nothing is said explicitly or implicitly to the contrary. For the sake of simplicity, only reference sign "100" will be used for the power supply busbar 100 in the future, and it shall be understood that this may be replaced by 100' or 100" in some variants.

Fig. 4A shows a busbar board 200 according to another embodiment of the present invention in an overview depiction.

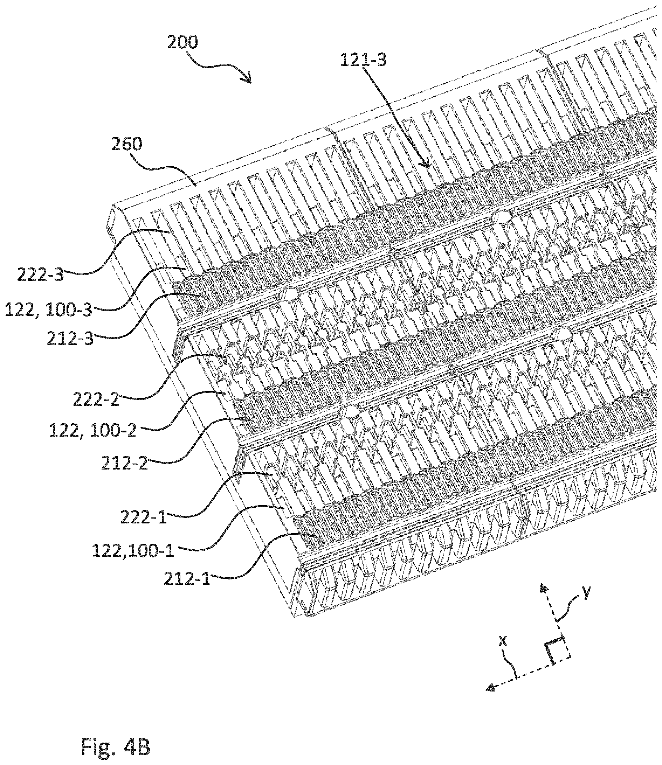

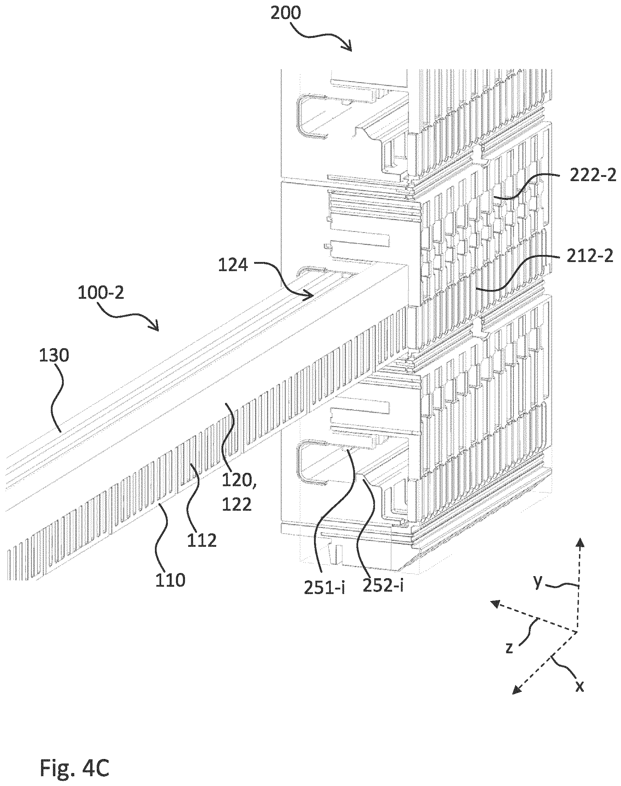

Fig. 4B shows a detail of (one side end of) the busbar board 200 of Fig. 4 and will be used in the following for a more detailed explanation.

The busbar board comprises a housing 260 in which a plurality of power supply busbars 100-1, 100-2, 100-3 (collectively designated as 100-i) according to embodiments of the present invention arranged in parallel. The housing 260 and/or any parts thereof may be manufactured using injection molding or the like.

Typically, each power supply busbar 100-i in the busbar board 200 carries a different phase of electrical current, such as L1, L2, L3, N, or PE. The busbar board 200 may therefore be typically provided with 3, 4, or 5 power supply busbars 100, although any number is possible.

The housing 260 is made from an electrically insulating material such as a type of plastic material, in particular a type of heat-conducting plastic material.

The busbar board 200 provides numerous functions: for example, it provides touch-protection to the power supply busbars 100-i, and it provides mechanical anchoring to the power supply busbars 100-i and to electrical devices 510a, 510b, 520a, 520b to be mounted thereto. The busbar board 200 may be provided as an out-of-the-box (OOTB) system, meaning that it is provided with the housing 260 closed and unable to be opened, either without tools, or without destruction. OOTB further means that no assembly by a user is required, as the user can simply remove the busbar board 200 from a box and start mounting it.

The housing 260 thus advantageously has a touch-protected front side (seen in Fig. 4B). This front side comprises, for each of its power supply busbars 100-i, a row (in x direction) of first openings 212-1, 212-2, 212-3 (or "slots"; collectively designated as 212-i and extending in y direction), through which the electrical and/or mechanical interfaces 511-i, 512-i of the electric devices of the first connection type 510a, 510b can enter the slots 112 of the first-type connection portion 110 arranged beneath.

The front side of the housing 260 further comprises, for each of its power supply busbars 100-i, a row (in x direction) of second openings 222-1, 222-2, 222-3 (or "slots"; collectively designated as 222-i and extending in y direction), through which the mechanical and/or electrical interfaces 521-i, 522-i, 523-i of the electrical devices of the second connection type 520a, 20b can engage with the second-type connection portion 120, in particular with the front-side contact part 122 (slightly visible through the second openings 222-i in Fig. 4B) and the rear-side engagement part 124 (by entering the)second openings 222-i in z direction, above the front-side contact part 122 in y direction, and then being moved in negative y direction). In Fig. 4B, the upper edge 121 of the power supply busbar 100-3 is visible, around which the mechanical and/or electrical interfaces 521-i, 523-i would wrap for engaging the rear-side engagement part 124.

Both the first and the second openings 212-i, 222-i of the housing 260 may be regularly placed, in particular equally-spaced, with the first openings 212-i conforming to the spacing and dimensions of the slots 112 in the first-type connection portion 110, while the second openings 222-i may have different spacing than the first openings 212-i. As shown in Fig. 5B, the period of repeating the 2nd openings 222-i may be an integer times the period of repeating the 1st openings 212-i, for example, it may be twice as large. This allows specific shapes of the second openings 222-i to be used for mechanical and/or electrical interfaces 513-i of the electrical devices of the first connection type 510a, 510b as well, and vice versa.

Fig. 4B further illustrates that the openings 212-i, 222-i in different rows, i.e. for granting access to different power supply busbars 100-i, may have different shapes. The shape of all of the first openings 212-i is (here, exemplarily) identical. By contrast, the second openings 222-1 for the first power supply busbar 100-1 (with the lowest y coordinates), the second openings 222-2 for the second power supply busbar 100-2 (with intermediate y coordinates), and the second openings 222-3 for the third power supply busbar 100-3 (with the larges y coordinates) have all different shapes between one another. This provides advantageous functionalities, which will be explained in more detail in connection with Fig. 8C in the following.

Preferably, the second openings 222-i within one and the same row (i.e., for the same power supply busbar 100) have the same shape, however. It is also preferred that all of the second openings 222-i, over all rows, have the same minimum width, so that all mechanical and/or electrical interfaces 521-i, 522-i, 523-i of electrical devices of the second connection type 520a, 520b with widths up to said minimum width can enter all of the second openings 222-i.

Fig. 4C shows an isometric view of the busbar board 200, with a power supply busbar according 100-2 mounted therein, wherein the other power supply busbars 100-1, 100-3 and some parts of the busbar board are faded out, to better illustrate how the specific cross-sectional shape of the power supply busbar 100-2 interfaces with the busbar board 200.

Fig. 4C illustrates how a first locking catch 251-i of the busbar board 200 may engage with the locking portion 151; 151" between the second-type connection portion 120 and the rear-side power-coupling portion 130 of the respective power supply busbar 100-i, and a second locking catch 252-i of the busbar board 200 may engage with the locking portion 152; 152' between the first-type connection portion 110 and the rear-side power-coupling portion 130 of the respective power supply busbar 100.

The first locking catches 251-i for the power supply busbars 100-i and the second locking catches 252-i for the power supply busbars 100-i extend all in parallel along the x direction. Accordingly, when manufacturing the busbar board 200, an interior portion of the housing 260 may be provided, the power supply busbars 100-i may be longitudinally slid into said interior portion, and then at least one end portion of the housing 260 may be used to close the interior portion, sealing the power supply busbars 100-i within the busbar board 200.

Fig. 4D shows a busbar board 200 according to the present invention from the rear side. It should be noted that Fig. 4D shows a somewhat shortened busbar board 200 as compared to the one in Fig. 4A, simply because it facilitates the explanation; in all respects, the busbar boards 200 may be treated as the same.

Now, specifically, Fig. 4D shows that the housing 260 may be assembled from a number of interior portion 265 (here: three) arranged along the x direction, and an end portion 269 on each end thereof, wherein all interior portion 265 are identical, and the end portions 269 are in the shown configuration provided with a left-side end portion and a right-side end portion. Thus, the busbar board 200 shown in Fig. 4A may be provided with more interior portions 265 as the one shown in Fig. 4D, without changing anything else.

Each interior portion 265 or end portion 269 may comprise, or consist of, two components: one rear-side component for receiving the power supply busbars 100-i and for mounting the busbar board to a mounting module; and a front-side component comprising the openings 212-i, 222-i (or, expressed differently, providing the mounting surface of the portion 265, 269). During manufacturing, rear-side component and front-side component may be coupled with one another, wherein the coupling mechanism is preferably configured in such a way that the rear-side component and the front-side component cannot be separated any more in a non-destructive manner (see also Fig. 10 and the corresponding description).

Any (preferably each) of the portions 265, 269 of the housing 260 may have at least one ridge protruding inward so as to interface with (specifically: enter) the inlet slots 113 in the power supply busbars 100-i. More preferably, for each power supply busbar 100-i to be comprised in the housing 260, one ridge protruding inward is provided at each of the portions 265, 269. The ridges protruding inward are preferably positioned at the center (in x direction, i.e., along the longitudinal extent of the power supply busbars 100-i) of each portion 265, 269 of the housing 260.

One thought behind this is that generally, the power supply busbars 100-i (typically made from metal or metal alloy) and the portions 265, 269 of the housing 260 (typically made from a plastic material) will expand differently when subjected to heat, especially heat emanating from the power supply busbars 100-i. In principle, this could cause the first openings 212-i in the portions 265, 269 on the one hand and the slots 112 in the power supply busbars 100-i beneath on the other hand to go out of alignment.

In the busbar board 200, this issue is solved by the inward ridges interfacing with the inlet slots 113, which aligns (or: centers) each portion 265, 269 of the housing 260 to the respective section of the power supply busbars 100-i it covers (or: houses).

As has been described in the foregoing, the busbar board 200 may be assembled as an OOTB system so that the portions 265, 269 cannot be disassembled from one another, either without tools, or not at all (without risking destruction).

The housing 260 has at least one rear-side opening 232-1, 232-2, 232-3 (collectively designated as 232-i) for each of its power supply busbars 100-i, for receiving external electrical power-coupling contacts for contacting the rear-side power-coupling portion 130 of the respective power supply busbar 100-i for feeding power to the respective power supply busbar 100-i (or receiving power from it).

As is shown in Fig. 4D, each interior portion 265 has four rear-side openings 232-i for each of the power supply busbars 100-i within the busbar board 200. In some rows, i.e. for some power supply busbars 100-i, the four rear-side openings 232-i may be immediately adjacent to one another (here for the first power supply busbar 100-1 and the third power supply busbar 100-3), while in other rows (here for the second power supply busbar 100-2) they may be arranged partially or completely separately, here in groups of two.

Specifically, the rear-side openings 232-i for the middle power supply busbar 100-2 may be arranged, two each, at both side ends (in x direction) of each of the interior portions 265. Where two interior portions 265 meet, there groups of four rear-side openings 232 are created, as is illustrated in Fig. 4D. These groups created by arranging two portions 265, 269 adjacently are then in their shape identical to the ones provided all by the same portion 265, 269.

The end portions 269 are here, exemplarily, designed with the same width (in x direction) as the interior portions 265, but only with rear-side openings 232-i for some of the rows of power supply busbars 100-i (here: only for two power supply busbars 100-i), and in equal or unequal numbers (here: two rear-side openings 232-2 for the middle power supply busbar 100-2, and four for one of the others - which one depends on the type of the end portion 269 - left end type or right end type).

Advantageously, the two rear-side openings 232-i in the middle of the end portions 269 can be used to complete the two rear-side openings 232-i in the middle of the interior portions 265 again to a group of four rear-side openings 232-i. As a result, a combination of one end portion 269 and one interior portion 265 comprises, for each of the power supply busbars 100-i, at least one group of four rear-side openings 232-i, marked with circles in Fig. 4D. This allows, as will be described in the following, to provide a rear-side power feed-in (or feed-out) via a power supply module having a width extending over one end portion 269 and one interior portion 265 of the housing 260.

Fig. 4D further illustrates that each middle portion 265 and each end portion 269 of the busbar board 200 is provided with two fastener openings 284-1, 284-2, arranged in line (her: in y direction) with one another, at the respective upper and lower ends (in y direction) of each middle portion 265 or end portion 269, respectively. As will be described in more detail in the following with respect to Fig. 5B and Fig. 5C, these fastener openings 284-1, 284-2 are provided for receiving fastener elements intended for fastening the busbar board 200 to an external apparatus, for example to a power supply module or a support module (see also Fig. 6 in the following). In the present example, the fastener openings 284-1, 284-2 have a rectangular shape. Beyond the fastener openings 284-1, 284-2, inside the busbar board 200, a respective fastener ledge is provided, with which the fastener element entering the fastener opening 284-1, 284-2 can interface (see also Fig. 5C).

Fig. 5A shows a power supply module 300, which is a part of a power supply system according to the present invention, which will be described in the following (see in particular Fig. 7).

The power supply module 300 is configured to couple to electric power conductors 301-1, 301-2, 301-3 (collectively designated as 301-i), for example carrying different electrical current phases (L1, L2, ...), and to couple each electric power conductor 301-i to a corresponding power supply busbar 100-i, when the busbar board 200 with the power supply busbars 100-i interfaces with (or: is mounted to) the power supply module 300.

The power supply module 300 is configured to receive at least a section of the busbar board 200 in a receiving volume 370. Referencing Fig. 4D, the power supply module 300 advantageously has essentially (or exactly) the combined width (in x direction) of one end portion 269 and one interior portion 265 of the housing 260 of the busbar board 200. The power supply module 300 also provides, for each of the power supply busbars 100-i, a respective group 330-i of electrical power-coupling contacts (see also Fig. 5B). From Fig. 4D it is evident that these groups 330-i are configured such that they slide into the rear-side openings 232-i marked with circles in Fig. 4D, when the busbar board 200 of Fig. 4D is brought to interface with the power supply module 300.

Preferably, the receiving volume 370 of the power supply module 300 is configured to be touch-protected, in particular with the IP20 classification.

Typically, the power supply module 300 will be installed vertically, i.e., with the power conductors 301-i running vertically, and the busbar board 200 being installed horizontally (perpendicular to the power conductors 301-i). When different electric devices 510a, 510b, 520a, 520b are mounted to the busbar board 200, considerable weight may rest on the power supply module 300.

Mechanical fixation/mounting of the busbar board 200 to the power supply module 300 for the interfacing is essentially provided by two mechanisms: the first mechanism comprises a plurality (here: eight) of protrusions 340 in a housing 360 of the power supply module 300, conforming to corresponding rear-side recesses 240 in the rear side of the housing 260 of the busbar board 200, as shown in Fig. 4D. The housing 360 is made from an electrically insulating material such as a type of plastic material.

The rear-side recesses 240 are configured to receive the plurality of protrusions 340 in a close-fitting manner for securing the busbar board 200 in directions x and/or y in parallel to the front side FS of the power supply busbars 100 when the busbar board 200 interfaces with (or: is mounted to) the power supply module 300.

Vertically (i.e., in y direction), the protrusions 340 may be arranged in line, while horizontally (i.e., in x direction), they may be staggered. They could also be arranged in lines in both directions, or staggered in both directions.

The protrusions 340 are preferably integrally formed with the housing 360 of the power supply module 300. Further preferably, the protrusions 340 comprise faces perpendicular to the housing 360 and, when the power supply module 300 is interfacing with the busbar board 200, perpendicular to the front side FS of the power supply busbars 100-i.

More preferably, the protrusions comprise faces that lie in planes that are perpendicular to the front side FS of the power supply busbars 100-i and run in parallel to the longitudinal extent of the power supply busbars 100-i (i.e., faces that extend in parallel to the x-z plane). The reason is that, as has been mentioned before, typically, busbar boards 200 will be mounted to a wall such that the power supply busbars 100-i therein run horizontally (i.e., with the x direction parallel to the floor, and the y direction running antiparallel to Gravity).

The busbar board 200 can have considerable weight, not only from the (partially massive) power supply busbars 100-i but also from any electric devices of any type mounted to (or: interfacing with) the busbar board 200. When the protrusions 340 of the housing of the power supply module 300 are inserted into (or: engaging with) the recesses 240 in the housing 260 of the busbar board 200, and the protrusions are shaped in the above described manner, they are capable of carrying a substantial amount of the weight of the busbar board 200.

For example, the protrusions may be essentially block-shaped, as seen in Fig. 5A. Accordingly, the recesses 240 in the busbar board 200 may have the corresponding shape.

Preferably, a second fixing mechanism is provided as well, especially for keeping the busbar board 200 within the receiving volume 370, in particular with respect to the z direction. Fig. 5A illustrates a first pair of fastener elements 381-1, 381-2 and a second pair of fastener elements 382-1, 382-2, all of the protruding through the housing 360 into the receiving volume 370.

All of the fastener elements 381-i, 382-i can interface with a corresponding fastener ledge of the busbar board 200. The fastener elements 381-i, 382-i are rotatably mounted at the power supply module 300 and can be rotated between an unlocking position in which the fastener elements 381-i, 382-i can be inserted into a fastener opening within the housing 260 of the busbar board 200 and removed therefrom, and a locking position in which the fastener element 381-i, 382-i is engaged with the fastener ledge, fastening the busbar board 200 to the power supply module 300.

Fig. 5B provides an interior view inside of the housing 360 of the power supply module 300 (i.e., with an upper cover of the power supply module 300 removed).

As seen in Fig. 5A and even clearer in Fig. 5B and Fig. 5C, fastening catches of the fastener elements 381-i, 382-i of one pair of fastener elements face each other. Fastener elements 381-1, 382-1 or 381-2, 382-2, which face the same direction, may be mounted on the same rotational axle, and may be operated by the same operating member 383-1, 383-2. The operating members 383-1, 383-2 may be shaped such that they may be engaged by a screwdriver or the like. Pulling an operating member 383-1, 383-2 outwards makes the fastener elements 381-i, 382-i coupled thereto rotate outwards and away from their respective opposite within the same pair of fastener elements, thus releasing the busbar board 200.

Fig. 5C shows a cross-section through the power supply module 300 on which the busbar board 200 is mounted, or, in other words, a busbar board 200 interfacing with the power supply module 300. Also shown are the power supply busbars 100-i mounted within the busbar board 200.

Fig. 5C especially illustrates how the fastener elements 381-1, 381-2 are inserted, via a respective fastener opening 284-i, into the busbar board 200 and therein engage with a respective fastener ledge 285-i. In other words, in Fig. 5C, the fastener elements 381-1, 381-2 are shown in their respective fastening position. In order to release the busbar board 200, the fastener elements 381-1, 381-2; 382-1, 382-2 would have to be rotated away from one another, into the respective fastener opening 284-i, and only then the busbar board 200 could be removed. Fig. 5C could also be taken to depict the busbar board 200 being mounted to a support module (see Fig. 6 and corresponding description).

Preferably, the power supply module 300 and the busbar board 200 (specifically: the fastener elements 381-i, 382-i, the fastener ledges 285-i and the fastener openings 284-i) are configured such that, when the fastener elements 381-i, 382-i are in the locking position, they are in a position oblique (not parallel and not perpendicular) to the mounting surfaces (parallel to the x-y-plane) of the power supply module 300 and the busbar board 200 to one another, such that the respective axis of rotation of each fastener element 381-i, 382-i is closer to the center of the busbar board 200 (in y direction) than the catch 387-i (or: tip) of said fastener element 381-i, 382-i. Preferably, the distance between the axes of rotation 384-i of the fastener elements 381-i, 382-i of one pair of fastener elements 381-i, 382-i is the closest distance between said fastener elements 381-i, 382-i of said pair of fastener elements 381-i, 382-i, and is in particular closer than the distance between the catches 387-i of the fastener elements 381-i, 382-i of the pair of fastener elements 381-i, 382-i.

This mechanism is not only easy to operate, but it also has a further advantage: forces that would drive the busbar board 200 away (in negative z direction) from the power supply module 300 would pull on the fastener catches 387-i of the fastener elements 381-i, 382-i. Since the catches 387-i of the fastener elements 381-i, 382-i lie more outward (in y direction) than the axes of rotation 384-i, pulling on the fastener elements 381-i, 382-i causes them to rotate (self-reinforcingly) towards one another, increasing the grip of the catches 387-i on the respective fastener ledge 285-i.

For this reason, the fastener elements 381-i, 382-i are preferably shaped as seen in Fig. 5C, having an angled shape with a first linear section 385-i radially extending from the axis of rotation 384-i, and then a second linear section 386-i provided at an angle to the first section 385-i (the angle being, for example, between 10 and 60 degrees). The first linear section 385-i is coupled to the axis of rotation 384-i, and the second linear section 386-i ends in the catch 387-i. The catch 387-i points inward, i.e. to the respective other fastener element 381-i, 382-i of the pair of fastener elements 381-i, 382-i.

Other geometries of the fastener elements 381-i, 382-i are also possible, for example, a perpendicular angle between first and second linear section. For achieving the self-reinforcing effect described in the foregoing, it is preferred when the fastener element 381-i, 382-i comprises at least (or exactly) two linear sections 385-i, 386-i arranged in series, wherein the linear section 385-i closest to the axis of rotation 384-i does not point towards the catch 386-i of the fastener element 381-i, 382-i directly.

Fig. 5B shows the three groups of electrical power-coupling contacts 330-1, 330-2, 330-3 without any touch-protection features of the housing 360 (shown in Fig. 5A) surrounding them being shown. Each group is provided for electrically coupling a respective one of the power conductors 300-i to a respective one of the power supply busbars 100-i of the busbar board 200. Between the power conductors 300-i and the respective power-coupling contacts 330-i, a respective intermediate bus bar (arranged in y direction) may be electrically coupled.

The electrical power-coupling contacts 330-i are shaped such as to interface with the rear-side power-coupling portion 130 of the respective power supply busbar 100. In the shown example, the electrical power-coupling contacts 330-i are lyre-shaped and thus configured to wrap around the rearmost end of the rear-side power-coupling portion 130 from both sides. The lyre shape has the advantage that, in case of short-circuits, its arms are pushed/pulled towards each other, thus increasing the physical grip on the rear-side power-coupling portion 130 in a situation in which a firm grip is especially desirable.

Fig. 5D shows a cross-section through the power supply module 300 and the busbar board 200 in parallel to the cross-section shown in Fig. 5C.

Fig. 5D especially illustrates how the electrical power-coupling contacts 330-i engage (here: bi-laterally grip) the rear-side power-coupling portion 130 of a corresponding power supply busbar 100-3, when the busbar board 200 is mounted to the power supply module 300.

Fig. 5E shows another cross-section through the power supply module 300 and the busbar board 200 in parallel to the cross-section shown in Fig. 5C and in parallel to the one shown in Fig. 5D.

Fig. 5E especially illustrates how the protrusions 340 (which could also be designated as stabilizing protrusions or weight-bearing protrusions) of the housing 360 of the power supply module 300 form-fittingly engage (or: fit, or: fill out) the rear-side recesses 240 in the housing 260 of the busbar board 200, when the busbar board 200 is mounted to the power supply module 300. Fig. 5E could also be taken to depict the busbar board 200 being mounted to a support module (see Fig. 6 and corresponding description).

Fig. 6 shows a configuration, as part of a power supply system according to an embodiment of the present invention, in which a power supply module 300 and two support modules 400 are arranged on a mounting plate 410 or a wall. The distances between the power supply module 300 and the support modules 400 are arranged such that the busbar board 200 can interface with all of them at the same time. The support modules 400 are formed essentially equal to the power supply module 300, with the difference that they do not provide for power conductors 301-i to be connected, and therefore also need not comprise any electrical power-coupling contacts 330-i. The support modules 400 may simply be provided to mount and fix the busbar board 200 to the mounting plate 410 or wall. Advantageously, they also comprise the two fixing mechanisms described above, i.e., the protrusions 340 in the housing and the fastener elements 381-i, 382-i.

Fig. 7 shows a power supply system 1000 according to an embodiment of the present invention.

The power supply system 1000 comprises at least a busbar board 200 (itself comprising one or more power supply busbars 100-i), and a power supply module 300. It may further comprise one or more support modules 400, a mounting plate 410, a control cabinet in which the other parts of the power supply system 1000 are arranged, and/or one or more electric devices 510a, 510b, 520a, 520b of the first or the second connection type.

The power supply system 1000 shown in Fig. 7 may, for example, be configured to be mounted vertically and to receive electrical power via the power conductors 301-i, here from below. Moreover, the power supply system 1000 shown is configured such that electrical power is coupled to the power supply busbars 100-i at their leftmost end in Fig. 7, and from there transported along their longitudinal extent, i.e., in x direction, to their rightmost end.

Alternative configurations are possible as well, for example, to deal with the varying amperage available along the longitudinal extent of the power supply busbars 100-i. For example, the power supply module 300 may be provided not at a lateral (here: left) end of the busbar board 200, but somewhere along its middle. In other words, the power supply module 300 does not have to interface with any end portion 269 of the housing 260 of the busbar board 200 at all, but can also only interface with interior portions 265 of the housing 260. This is achieved by the regular design of the rear side of the busbar board 200, which repeats the pattern of three groups of rear-side openings 232-i arranged in diagonal. Fig 4A shows four such complete patterns. In such a configuration with the power supply module 300 interfacing with the busbar board 200 somewhere in its middle, current may be provided in both left-going and right-going directions.

It is also possible to provide more than one power supply module 300, e.g. one on the leftmost end, and one on the rightmost end, of the busbar board 200, wherein both feed electrical current into the busbar board 200 from their respective ends. Other variants may include again one power supply module 300 on each end, but one configured to feed electrical current into the busbar board 200, and one configured to feed electrical current out of the busbar board 200.

Any of these variants may be combined with electric devices mountable to the busbar board 200 on its front side, which may also be configured to feed electrical current into the busbar board 200 from the front side and/or to feed electrical current out of the busbar board 200 at the front side.

For example, a power supply module 300 may be provided for rear-side feed-in of electrical current, and an electric device mounted to the front side of the busbar board 200 may be configured to feed out (some) electrical current. These examples will suffice to illustrate the enormous variety and possibilities that are provided by the present invention.

Fig. 7 also illustrates how the entire mounting surface at the front side of the busbar board 200 is available for the electric devices 510a, 510b, 520a, 520b, completely regardless of the present of a power supply module 300 or a support module 400 at the rear side.

Finally, Fig. 8A through Fig. 9B, to which reference has been made already, illustrate in more details some of the electric devices 510a, 510b, 520a, 520b that can be used with the busbar board 200 of the present invention. They specifically serve to show how electrical devices of the first connection type 510a, 510b and electrical devices of the second connection type 520a, 520b can both be mounted to the same busbar board 200 without any problems at all.

Fig. 8A shows a fuse switch disconnector, Fig. 8B a power supply.

Fig. 8C shows advantageous details of the second openings 222-i of the busbar board 200. Specifically, the second openings 222-3 in the top row in Fig. 8C, the second openings 222-2 in the middle row in Fig. 8C, and the second openings 222-1 in the bottom row in Fig. 8C, all have different shapes.

While all have the same minimum width w1, the second openings 222-3 in the top row have a simply rectangular shape.

The second openings 222-1 in the bottom row generally have the same rectangular shape as the second openings 222-3 of the top row, but in addition are provided with a first flared portion 224 having a width w2 larger than the minimum width w1. The second openings 222-1 in the bottom row thus have a shape in which, along their length in the y direction, their width is first w1, then w2, then w1 again.

The second openings 222-2 in the middle row generally have the same shape as the second openings 222-1 in the bottom row, but in addition are provided with a second flared portion 226 having a width w3 larger than the minimum width w1. The second openings 222-2 in the middle row thus have a shape in which, along their length in the y direction, their width is first w1, then w3, then w1, then w2, then w1. Herein, w2 and w3 may be the same or different from another; in the present example, w3 is smaller than w2 but still larger than w1.

Some advantageous functionalities, which are provided by these shapes of the second openings 222-i, will now be described with respect to the electrical device of the first connection type 510b of Fig. 8B, i.e. with the power supply 510b of the first connection type.

First, if additional grip between an electrical device of the first connection type 510b and the busbar board 200 is desired or required, said device 510b may be provided with movable fastening hooks 513-1, 513-2.

In the present example, two fastening hooks 513-1 are provided, in parallel to one another, between the first row of mechanical contacts 511-1 and the second row of electrical and mechanical interfaces 511-2, 512-2. Two more fastening hooks 513-2 are provided, in parallel to one another, between the second row of electrical and mechanical interfaces 511-2, 512-2 and the third row of electrical and mechanical interfaces 511-3, 512-3.

The fastening hooks 513-1, 513-2 are arranged to engage, when the interfaces 511-i, 512-i are being inserted into the first openings 212-i of the busbar board 200, a respective edge 225 of the first flared portions 224 in the second openings 222-1, 222-2, with the oblique surface at their top. In Fig. 8C, these edges 225 are the lower edges of the first flared portions 224 in the drawing.

The fastening hooks 513-1, 513-2 are configured to be movable (against a biasing force, provided e.g. by a spring) along the longitudinal direction of the mechanical and electrical interfaces 511-1, 512-2 (or, in other words, in the y direction when the device 510b is being pushed into the first openings 212-i). When the user presses the device 510b into the busbar board 200 (along the z direction), the edges 225 interact with the oblique surfaces at the top of the fastening hooks 513-i and push them along the positive y direction, until the fastening hooks 513-i are completely arranged in line with the first flared portion 224. At that point, the catches of the fastening hooks 513-i have become free of the edges 225, and the biasing force causes them to return to their unbiased stated and thus to wrap around the edges 225, fastening the device 510b to the busbar board 200.

The electrical device of the first connection type 510b is further provided with an unfastening mechanism, which can be operated by a user when the device 510b is mounted on the busbar board 200. Operating the unfastening mechanism causes the fastening hooks 513-i to move against their biasing force until they are again fully aligned with the first flared portions 224, at which point the device 510b can simply be pulled away from the busbar board 200. The unfastening mechanism may be configured such that it requires a tool, e.g., a screwdriver, to be operated, to prevent accidental mishandling.

Another function provided by the shapes of the second openings 222-i relates to preventing possible wrong orientations of electrical devices of the first connection type 510b when mounting them on the busbar board 200.

As has been described in the foregoing, the layout of the electrical interfaces 512-i of the device 510b is non-symmetric: electrical interfaces 512-2, 512-3 are provided only in two rows but not in the third (the space between the mechanical interfaces 511-1 is closed and empty). Accordingly, it is important that the device 510b is mounted (or: installed) with the correct orientation on the busbar board 200, since the power supply busbar 100-i receiving the row of mechanical contacts 511-1 will not electrically be connected to the device 510b. Since in the present example the first openings 212-i of all rows (i.e., for all power supply busbars 100-i) have the same shape, in principle this could happen.

In order to prevent such a wrong-orientation installation, the second flared portion 225 is provided in some but not all rows of second openings 222-i. In the present example, only the second openings 222-1 of the middle (in y coordinates) power supply busbar 100-2 comprises the second flared portion 225.

Correspondingly, the mounting face of the device 510b only comprises one row of orientation protrusions 514. In the example of Fig. 8B, these orientation protrusions 514 are only provided between the two rows of electrical interfaces 512-2, 512-3. Thus, the device 510b can only be mounted on the busbar board 200 such that its electrical interface 512-3 enters the first slots 212-3 of the top power supply busbar 100-3 (with the highest y coordinates), and its electrical interface 512-2 enters the first slots 212-2 of the middle power supply busbar 100-2 (with the intermediate y coordinates).

Fig 8D shows a cross-section (parallel to a y-z-plane) through an electrical device of the first connection type 510b of Fig. 8B mounted on the busbar board 200. Of said device, only the elements necessary for the explanation of the electrical and mechanical connection close to the power supply module 300 are shown. Behind the device 510, the device 510a is visible, as in the arrangement of Fig. 7.

Fig. 8D illustrates especially how the orientation protrusion 514 of the electrical device 510c enters the second flared portion 226, and how the fastener hooks 513-1, 513-2 enter the first flared portions 224 of the busbar board 200. Fig. 8D also shows how the electrical interfaces 512-i are passed through the slots 112 of the first-type connection portions 110 of the power supply busbars 100-i.

Fig 8E shows another cross-section (parallel to an x-z-plane) through the electrical device of the first connection type 510a mounted on the busbar board of Fig. 4A-4D, especially illustrating the interfacing of the electrical interfaces 512-i and of the mechanical interfaces 511-i of the electrical device 510b with the first openings 212-i in the busbar board 200 and the slots 112 in the power supply busbar 100-i.

Fig. 9A another fuse switch disconnector, and Fig. 9B an adapter for all kinds of electric and/or electronic devices.

Fig 9C shows a cross-section (parallel to an y-z-plane) through an electrical device of the second connection type 520a mounted on the busbar board 200, illustrating especially how the electro-mechanical interfaces 521-i interface with the rear-side engagement parts 124 of the second-type connection portions 120 of the power supply busbars 100-i, and how the electrical interfaces 522-i engage with the front-side contact parts 122 of the second-type connection portions 120 of the power supply busbars 100.

Fig. 10 schematically illustrates a method for assembling a busbar board according to an embodiment of the present invention.

In a step S10, at least one component of an interior portion 265 of the housing 260 of the busbar board 200 is provided. The component is preferably a rear-side component, but could also be a front-side component or even the entire interior portion 265 itself. In the following the case will be described that the components are rear-side components, although the description equally applies for rear-side components or components identical to the entire portion. In case more than one interior portion 265 is to be provided, multiple rear-side components of interior portions 265 may be fixed to one another at their respective side ends in a row, preferably such that they then cannot be separated anymore using non-destructive methods.

In a step S20, at least one power supply busbar 100; 100'; 100" is longitudinally slid into the at least one rear-side component of the interior portion 265 at a side end of the component of the interior portion 265. In case more than one rear-side component of more than one interior portion 265 is provided, the at least one power supply busbar 100; 100'; 100" may be slid through a plurality of the rear-side components of the interior portions 265 and preferably through, or at least into, all of the rear-side components of the interior portions 265 arranged and fix to one another in a row.

In a step S30, at least one open side end of the rear-side component of at least one interior portion 265 is closed with a rear-side component of an end portion 269 of the housing 260, sealing the at least one power supply busbar 100; 100'; 100" in. Preferably, both open side ends of the rear-side component of the interior portion 265, or row of rear-side components of interior portions 265, are fixed with a respective rear-side component of an end portion 269. As has been described in the foregoing, the rear-side components of the interior portions 265 may be identical to one another and arranged next to one another in a translationally symmetric manner. In a step S40, each rear-side component is combined (or: coupled) with a respective front-side component, in particular such that they then cannot be separated (or: disassembled) any more in a non-destructive manner.

Preferably, (some of, but preferably all of) the front-side components of the portions 265, 269 comprise an inward-protruding ridge configured to interface (or: couple) with a respective inlet slot 113 in the power supply busbar 100, for each power supply busbar 100 to be comprised in the busbar board 200. Thus, in step S40, when the front-side components are combined with the rear-side components in non-releasable manner, each protruding ridge is brought into alignment and then inserted into a corresponding inlet slot 113. As has been described in the foregoing, this makes the alignment between the (especially front-side component of the) portions 265, 269, and thus of the housing 260 in general, and the slots 112 in the first-type connection portions 110 of the power supply busbars 100, more accurate, and more stable.

### List of reference signs

- 100: power supply busbar
- 100': power supply busbar
- 100": power supply busbar
- 110: first-type connection portion
- 112: slots
- 113: inlet slots
- 120: second-type connection portion
- 120': second-type connection portion
- 121: upper edge of a bus bar
- 122: front-side contact part
- 124: rear-side engagement part
- 125: indentation channel
- 130: rear-side power-coupling portion
- 130': rear-side power-coupling portion
- 130": rear-side power-coupling portion
- 131: rearmost end of the rear-side power-coupling portion
- 131': rearmost end of the rear-side power-coupling portion
- 131": rearmost end of the rear-side power-coupling portion
- 135": channel151 locking portion
- 151": locking portion
- 152: locking portion
- 152': locking portion
- 153": locking portion
- 200: busbar board
- 212: first openings
- 222: second openings
- 224: first flared portions
- 225: lower ledge of the first flared portions
- 226: second flared portion
- 232: rear-side openings
- 240: rear-side recesses
- 251: first locking catch
- 252: second locking catch
- 260: housing
- 265: interior portion of the housing
- 269: end portion of the housing
- 284: fastener openings
- 285: fastener ledges
- 300: power supply module
- 301: power conductors
- 330: power coupling contacts
- 340: protrusions
- 360: housing of the power supply module
- 370: receiving volume
- 381: fastener elements
- 382: fastener elements
- 383: operating member
- 384: axes of rotation of fastener elements
- 385: first linear section of a fastener element
- 386: second linear section of a fastener element
- 387: catch of a fastener element
- 400: support module
- 410: mounting plate
- 1000: power supply system
- 510a: electrical device of the first connection type
- 510b: electrical device of the first connection type
- 511: mechanical interfaces
- 512: electrical interfaces
- 513: fastening hooks
- 514: orientation protrusion
- 520a: electrical device of the second connection type
- 520b: electrical device of the second connection type
- 521: electro-mechanical interface
- 522: electrical interface
- 523: mechanical interface
- S10..S40: method steps

## Claims

1. A hybrid power supply busbar (100; 100'; 100") comprising:
a first-type connection portion (110) having a plurality of regularly placed slots (112) for receiving, from a front side (FS) of the power supply busbar (100; 100'; 100"), electrical and/or mechanical interfaces (511-i, 512-i) of electric devices of a first connection type (510a, 510b) through a selection of the slots (112);
a second-type connection portion (120; 120') having a front-side contact part (122) at the front side (FS) of the power supply busbar (100; 100'; 100") and a rear-side engagement part (124) facing away from the front-side contact part (122), for first electrical and/or mechanical interfaces (521-i, 523-i) of electric devices of a second connection type (520a, 520b) to engage the rear-side engagement part (124) while second electrical and/or mechanical interfaces (522-i) thereof contact the front-side contact area (122); and
a rear-side power-coupling portion (130; 130'; 130") extending from the second-type connection portion (120; 120') and away from the front side (FS) of the power supply busbar (100; 100'; 100"), for receiving a feed-in current for powering the power supply busbar (100; 100'; 100") and/or for providing a feed-out current at a rear side (RS) of the power supply busbar (100; 100'; 100").

2. The power supply busbar (100; 100'; 100") of claim 1, wherein the rear-side power-coupling portion (130; 130'; 130") is configured to be a rear-side feed-in portion for receiving a feed-in current for the power supply busbar (100; 100'; 100") to provide current to electric devices of the first connection type via the first-type connection portion (110) and/or to electric devices of the second connection type via the second-type connection portion (120; 120').

3. The power supply busbar (100; 100'; 100") of claim 1 or claim 2, wherein any cross-section perpendicular to the longitudinal extent of the power supply busbar (100; 100'; 100") intersects with the first-type connection portion (110), the second-type connection portion (120; 120') and the rear-side power-coupling portion (130; 130'; 130").

4. The power supply busbar (100; 100'; 100") of any of claims 1 to 3, being integrally formed of at least one metal and/or at least one metal alloy.

5. The power supply busbar (100; 100'; 100") according to any of claims 1 to 4,
comprising at least one locking portion (151; 151", 152; 152', 153") arranged between the second-type connection portion (120; 120') and the rear-side power-coupling portion (130; 130'; 130") and/or between the first-type connection portion (110) and the rear-side power-coupling portion (130; 130'; 130") and adapted for receiving a locking catch (251, 252) of a busbar board (200) for locking the power supply busbar (100; 100'; 100") within the busbar board (200).

6. A busbar board (200) comprising a housing (260) in which a plurality of power supply busbars (100; 100'; 100") according to any of claims 1 to 5 is arranged, the housing (260) having a touch-protected front side, through which the electrical and/or mechanical interfaces (511-i, 512-i, 513-i) of the electric devices of the first connection type (510a, 510b) can enter the slots (112) of the first-type connection portion (110) and through which the mechanical and/or electrical interfaces (521-i, 522-i, 523-i) of the electric devices of the second connection type (520a, 520b) can engage with the front-side contact part (122) and/or the rear-side engagement part (124),
the housing (260) further having at least one rear-side opening (232-i) for each of its power supply busbars (100; 100'; 100"), for receiving external electrical power-coupling contacts for contacting the rear-side power-coupling portion (130; 130'; 130") of the respective power supply busbar (100; 100'; 100") for feeding power to the respective power supply busbar (100; 100'; 100") and/or for receiving power from the respective power supply busbar (100; 100'; 100").

7. The busbar board (200) of claim 6, wherein the touch-protected front side of the housing (260) comprises, for each of the power supply busbars (100; 100'; 100''), a first row of first openings (212-i) which align with the slots (112) for allowing electrical and/or mechanical interfaces (511-i, 512-i, 513-i) of the electric devices of the first connection type (510a, 510b) to pass through them and through the slots (112) of the corresponding power supply busbar (100) below; and
a second row of second openings (222-i) for allowing the electrical and/or mechanical interfaces (521-i, 522-i, 523-i) of the electrical devices of the second connection type (520a, 520b) to pass through and engage with the second-type connection portion (120) of the corresponding power supply busbar (100) below;
wherein the first and second rows of first and second openings (212-i, 222-i) may be identically formed for all the power supply busbars (100; 100'; 100"), or partially differently.

8. The busbar board (200) of claim 6 or claim 7, wherein the second openings (222-1, 222-2) for a first one (100-1, 100-2) of the power supply busbars (100; 100'; 100") have a shape different from a shape of the second openings (222-3) for at least one other one (100-3) of the power supply busbars (100; 100'; 100").

9. The busbar board (200) of claim 8, wherein the second openings (222-2) for the first one (100-2) of the power supply busbars (100; 100'; 100") each are shaped as rectangles modified by at least one flared portion (224, 226), whereas the second openings (222-3) for at least one other one (100-3) of the power supply busbars (100; 100'; 100") are shaped as simple rectangles.

10. The busbar board (200) of claim 8 or claim 9, wherein the second openings (222-2) for the first one (100-2) of the power supply busbars (100; 100'; 100") each are shaped as rectangles modified by at least two flared portions (224, 226), whereas the second openings (222-1) for at least one other one (100-1) of the power supply busbars (100; 100'; 100") are shaped as rectangles modified by only a single flared portion (224).

11. A power supply system (1000) comprising a busbar board (200) according to any of claims 6 to 10, and a power supply module (300) for rear-side power coupling to the busbar board (200), wherein the busbar board (200) is configured to interface with the power supply module (300), the power supply module (300) having, for each power supply busbar (100; 100'; 100'') of the busbar board (200), at least one electrical power-coupling contact (330-i) arranged to enter at least one of the rear-side openings (232-i) of the busbar board (200) when the busbar board (200) interfaces with the power supply module (300).

12. The power supply system (1000) of claim 11,
wherein the busbar board (200) further comprises pairs of fastener openings (284-i), through which fastener elements (381-i, 382-i) of pairs of fastener elements (381-i, 382-i) of the power supply module (300) can interface with a corresponding fastener ledge of the busbar board (200); wherein each fastener element (381-i, 382-i) is rotatably mounted at the power supply module (300) and can be rotated between an unlocking position in which the fastener element (381-i, 382-i) can be inserted into a fastener opening of the busbar board (200) and removed therefrom, and a locking position in which the fastener element (381-i, 382-i) is engaged with the fastener ledge, fastening the busbar board (200) to the power supply module (300).

13. The power supply system (1000) of claim 12,
wherein fastener elements (381-i, 382-i) of the same pair of fastener elements (381-i, 382-i) are arranged to rotate towards each other when they are rotated from the unlocking position into the locking position.

14. The power supply system (1000) of any of claims 11 to 13,
wherein the power supply module (300) comprises a housing (360) having a plurality of protrusions (340), and the housing (260) of the busbar board (200) comprises a plurality of rear-side recesses (240) configured to receive the plurality of protrusions (340) in a close-fitting manner for securing the busbar board (200) in directions (x, y) in parallel to the front side (FS) of the power supply busbars (100; 100'; 100") when the busbar board (200) interfaces with the power supply module (300).

15. A method for assembling a busbar board (200) according to any of claims 6 to 10, comprising:
providing (S10) a component of an interior portion (265) of the housing (260) of the busbar board (200);
longitudinally sliding (S20) in the power supply busbars (100; 100'; 100") at a side end of the component of the interior portion (265); and
closing (S30) at least one open side end of the component of the interior portion (265) of the housing (260) with a component of an end portion (269) of the housing (260), sealing the power supply busbars (100; 100'; 100") in.
